(19) Europäisches Patentamt / European Patent Office / Office européen des brevets

(11) **EP 4 399 356 B1**

(12) **EUROPEAN PATENT SPECIFICATION**

(45) Date of publication and mention
of the grant of the patent:
**04.03.2026  Bulletin 2026/10**

(21) Application number: **22740412.6**

(22) Date of filing: **06.07.2022**

(51) International Patent Classification (IPC):
*D02G 3/40* *(2006.01)*

(52) Cooperative Patent Classification (CPC):
(C-Sets available)
**D07B 1/025; A01K 61/60; A01K 75/00;
A01N 25/34; A01P 15/00; B66C 1/125; B66C 1/18;
D02G 3/404; D04B 21/12; D04C 1/02; D04C 1/08;
D06M 11/38; D06M 13/50; D06M 15/227;
D06M 15/643;**                                    (Cont.)

(86) International application number:
**PCT/EP2022/068794**

(87) International publication number:
**WO 2023/036492 (16.03.2023 Gazette 2023/11)**

(54) **COMPOSITE ELONGATED BODY**

LÄNGLICHER VERBUNDKÖRPER

CORPS ALLONGÉ COMPOSITE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.09.2021  PCT/EP2021/074622
07.09.2021  PCT/EP2021/074623
07.09.2021  PCT/EP2021/074621**

(43) Date of publication of application:
**17.07.2024  Bulletin 2024/29**

(60) Divisional application:
**26154416.7**

(73) Proprietor: **Avient Protective Materials B.V.
6167 RD Geleen (NL)**

(72) Inventors:
  • **SCHNEIDERS, Hans
    6167 RD GELEEN (NL)**
  • **ROOZEMOND, Peter
    6167 RD GELEEN (NL)**
  • **VERBEKE, Karel Tom Kathleen
    6167 RD GELEEN (NL)**

(74) Representative: **Avient Protective Materials
Urmonderbaan 22
6167 RD Geleen (NL)**

(56) References cited:
EP-A1- 2 424 907          WO-A1-2011/154383
WO-A1-2017/060461     WO-A1-2017/060469
GB-A- 1 405 551           JP-A- 2003 261 765
US-A1- 2007 202 329    US-B2- 7 858 180

(52) Cooperative Patent Classification (CPC): (Cont.)
**D06M 16/00; D07B 1/142; D07B 5/006;**
**F16G 13/12; F16G 15/12;** D06M 15/657;
D06M 2101/20; D07B 1/02; D07B 5/005;
D07B 2201/1004; D07B 2201/1096;
D07B 2201/2009; D07B 2201/2012;
D07B 2201/2044; D07B 2201/2076;
D07B 2205/201; D07B 2205/2014;
D07B 2205/3017; D07B 2401/206; D07B 2401/207;
D07B 2401/2075; D07B 2501/2015;
D10B 2321/0211; Y02A 40/81

C-Sets
**A01N 25/34, A01N 43/08;**
D07B 2205/201, D07B 2801/16;
D07B 2205/2014, D07B 2801/10;
D07B 2205/3017, D07B 2801/16

**Description**

The present invention concerns a composite elongated body. The present invention further concerns a lengthy body comprising the composite elongated body according to the invention. It also relates to a method of manufacturing the composite elongated body and a method of manufacturing the lengthy body. The present invention also relates to an article comprising the composite elongated body and/or the lengthy body according to the invention and to a method of manufacturing such article. A crane comprising a sheave and a rope comprising the composite elongated body are also part of the invention. The invention further relates to a method of lifting and / or placement of an object and to a use of a polymeric composition.

In many applications, ropes and belts are repeatedly subjected to friction and deformation when in contact with a counter surface. During use a rope is frequently pulled over fairleads, bollards, drums, flanges, pulleys, sheaves, etc., amongst others resulting in abrasion and bending of the rope. When exposed to such frequent abrasion and bending, a rope may fail due to rope, strand and/or filament damage; fatigue failure is often referred to as abrasive wear or bend fatigue.

HPPE (High Performance Poly Ethylene) fibre ropes with improved bending fatigue have been described in for example WO2007/062803 and WO2011/015485. WO2007/062803 describes a rope constructed from high performance polyethylene fibres and polytetrafluoroethylene fibres. These ropes can contain 3-18 mass% of liquid polyorganosiloxanes. WO2011/015485 describes ropes comprising HPPE fibres coated with a cross-linked silicone rubber. Thus, in the prior art it has been suggested to use silicone compositions alone or in combination with low friction fibres such as PTFE, to reduce the frictional behaviour of the HPPE fibres during bending applications. Especially WO2011/015485 describes a technology that has become established in the field of high end bending applications.

WO 2017/060461 concerns a method for producing a lengthy body comprising high performance polyethylene fibres and a polymeric resin and such composite lengthy body.

It is noted that US 2007/202329 relates to improvements in ropes, and in particular to high tenacity synthetic ropes suitable for use in marine applications.

It is noted that GB 1 405 551 relates to a size composition, and more particularly to a size composition for application to glass fibers to improve the processing and performance characteristics of glass fibers in glass fiber textiles, in the manufacture of glass fiber-reinforced elastomeric products and in the manufacture of glass fiber-reinforced plastics.

The present invention sets out to provide an improved lengthy body such as an improved synthetic rope. In particular an improved rope comprising HPPE filaments, such as a rope constructed from HPPE filaments. A lengthy body according to the invention, such as a rope according to the invention, comprises a composite elongated body according to the invention.

The present invention provides a composite elongated body, comprising high performance polyethylene HPPE filaments having a tenacity of at least 0.6 N/tex and a polymeric composition throughout the composite elongated body, wherein the polymeric composition comprises

a) a thermoplastic ethylene copolymer as described herein and
b) a lubricant as described herein;

and wherein the thermoplastic ethylene copolymer is a copolymer of ethylene and wherein said polymeric composition has a peak melting temperature in the range from 40 to 140°C, measured in accordance with ASTM E794-06.

A rope comprising the composite elongated body according to the invention demonstrates an improved abrasion performance. In an aspect this is demonstrated by an improved wear resistance against a static contra-surface, such as a fairlead.

This improved wear resistance against a static contra-surface may also be referred to as an improved external abrasion. External refers to the outer surface of the rope, the part that is visible to the human eye, or the part that if the rope is held in the hand or is touched by hand is in contact with the hand. This improvement is demonstrated herein for the rope as such without the use of a cover around the outer surface of the rope. The inventors found that the abrasion properties came combined with other improved mechanical properties. Said improvement may be seen for example in an improved repeated bending performance, or coefficient of friction. In particular in an improved Cyclic Bending Over Sheave (CBOS) performance.

The composite elongated body according to the invention is a composite material. A composite material is a material made from two or more constituent materials with significantly different physical and/or chemical properties that, when combined, produce a material with characteristics different from the individual components. The individual components remain separate and distinct within the finished structure.

In its simplest form the composite elongated body comprises 2 or more filaments lying side by side without being twisted about each other. The filaments will substantially be oriented in a single direction, the length direction of the composite elongated body.

By fibre is herein understood an elongated body, the length dimension of which is much greater than the transverse dimensions of width and thickness. The term fibre herein includes a filament, such filament may have a regular or irregular cross-section.

A filament is an elongated body, the length dimension of which is much greater than the transverse dimensions of width and thickness. Fibres may have continuous lengths, known in the art as filaments or continuous filaments, or discontinuous lengths, known in the art as staple fibres.

A yarn for the purpose of the invention is an elongated body comprising at least two filaments. In an aspect the yarn comprises at least at least 20 filaments, preferably at least 100 filaments, more preferably at least 400 filaments. The yarn comprises typically at most 10.000 filaments. In an aspect the yarn comprises at most 5000 filaments. The filaments in the yarn may be twisted or untwisted, preferably the filaments of a yarn are untwisted. During coating it is beneficial to have the filaments in the yarn untwisted to improve coating penetration / wetting on the surface on the filaments.

By elongated herein is understood the length dimension being much greater than the transverse dimensions of width and thickness. Preferably said length dimension is at least 10 times, more preferably at least 20 times even more preferably at least 50 times and most preferably at least 100 times greater than the width or thickness dimension whichever is larger. In an aspect the length dimension is from 20 to $1 \times 10^{10}$ times greater than the width or thickness dimension whichever is larger.

A lengthy body herein is herein understood an elongated body, the length dimension of which is much greater than the transverse dimensions of width and thickness or diameter. Preferably said length dimension is at least 10 times, more preferably at least 20 times even more preferably at least 50 times and most preferably at least 100 times greater than the width or thickness dimension whichever is larger. In an aspect the length dimension of the elongated body is from 20 to $1 \times 10^{10}$ times greater than the width or thickness dimension whichever is larger.

The present invention further provides a composite elongated body, comprising high performance polyethylene HPPE filaments having a tenacity of at least 0.6 N/tex and a polymeric composition throughout the composite elongated body, wherein the polymeric composition comprises a thermoplastic ethylene copolymer, wherein the thermoplastic ethylene copolymer is a copolymer of ethylene and wherein said polymeric composition has a peak melting temperature in the range from 40 to 140°C, measured in accordance with ASTM E794-06, characterized in that the polymeric composition further comprises a lubricant.

In an aspect of the present invention the length dimension of the composite elongated body is at least 100, preferably at least 500 times greater than the width or thickness dimension of the composite elongated body, whichever is larger. In an aspect the length dimension of the composite elongated body is from 20 to $1 \times 10^{10}$ times greater than the width or thickness dimension whichever is larger.

In a further aspect the ratio, on solid content basis, of the thermoplastic ethylene copolymer and the lubricant is from 1:1 to 1:10, preferably from 1:1 to 1:5, more preferably from 1:1.5 to 1:4, most preferably from 1:2 to 1:1.35. In an aspect the ratio, on solid content basis, of the thermoplastic ethylene copolymer and the lubricant is 1:1; 1:1.1; 1:1.2; 1:1.3; 1:1.4; 1:1.5; 1:1.6; 1:1.7; 1:1.8; 1:1.9; 1:2; 1:2.1; 1:2.2; 1:2.3; 1:2.4; 1:2.5; 1:2.6; 1:2.7; 1:2.8; 1:2.9; 1:3.0; 1:3.1; 1:3.2; 1:3.3; 1:3.4; 1:3.5; 1:3.6; 1:3.7; 1:3.8; 1:3.9; 1:4.0; 1:4.1; 1:4.2; 1:4.3; 1:4.4; 1:4.5; 1:4.6; 1:4.7; 1:4.8; 1:4.9; 1:5; 1:5.1; 1:5.2; 1:5.3; 1:5.4; 1:5.5; 1:5.6; 1:5.7; 1:5.8; 1:5.9; 1:6; 1:6.1; 1:6.2; 1:6.3; 1:6.4; 1:6.5; 1:6.6; 1:6.7; 1:6.8; 1:6.9; 1:7; 1:7.1; 1:7.2; 1:7.3; 1:7.4; 1:7.5; 1:7.6; 1:7.7; 1:7.8; 1:7.9; 1:8; 1:8.1; 1:8.2; 1:8.3; 1:8.4; 1:8.5; 1:8.6; 1:8.7; 1:8.8; 1:8.9; 1:9; 1:9.1; 1:9.2; 1:9.3; 1:9.4; 1:9.5; 1:9.6; 1:9.7; 1:9.8; 1:9.9; or 1:10.

In an aspect of the invention the lubricant includes one or more of the following, including derivatives of these lubricants: a synthetic wax such as PE and/or PP wax; an animal wax such as beeswax; a plant wax such as carnauba wax; a synthetic grease or synthetic oil; a mineral grease or mineral oil; an inorganic solid such as graphite or molybdenum disulfide; a ceramic such as a ceramic lubricant or ceramic coating; a PUR; an acrylic; a hybrid of PUR and acrylic; or any combination thereof.

In an embodiment of the composite elongated body according to the invention the lubricant comprises a wax.

In an aspect of the composite elongated body according to the invention the lubricant is a wax.

Waxes are organic compounds that characteristically consist of long aliphatic alkyl chains, although aromatic compounds may also be present. Typically aliphatic alkyl chains are C20 to C40 alkyl chains. Natural waxes may contain unsaturated bonds and include various functional groups such as fatty acids, primary and secondary alcohols, ketones, aldehydes and fatty acid esters. Synthetic waxes often consist of homologous series of long-chain aliphatic hydrocarbons (alkanes or paraffins) that lack functional groups.

Suitable waxes may include synthetic waxes or a natural waxes. Suitable waxes may include, but are not limited to: animal waxes such as beeswax, Chinese wax, spermaceti and wool wax; alant waxes such as wood wax, bayberry wax, candelilla wax, carnauba wax, castor wax, grass wax, japan wax, Jojoba oil wax, rice bran wax and soy wax; mineral waxes, such as ceresin waxes, montan wax, ozocerite wax and peat waxes; petroleum waxes, such as paraffin wax and microcrystalline wax; and synthetic waxes such as Fischer-tropsch wax, polyolefin waxes, including polyethylene homopolymer waxes, oxidized polyethylene wax, polypropylene wax, stearamide wax, substituted amide wax, ethylene-acrylic acid copolymer wax, ethylene-vinyl acetate copolymer waxes, oxidized ethylene-vinyl acetate copolymer wax, ethylene - maleic anhydride graft copolymer, a propylene - maleic anhydride graft copolymer wax, wax and other chemically modified waxes.

A suitable wax may include a wax with a melting point from 39 to 45.0 °C. This melting point range may improve lubricating properties and improve performance during use. Preferably, the wax is a polyethylene wax, a polypropylene wax, beeswax, carnauba wax or a Fischer-Tropsch wax. More preferably it is carnauba wax.

Carnauba wax typically has a melting point of 82-86 °C (180-187 °F). Such melting point range may be beneficial in applications where the temperature may rise during use. Carnauba wax (INCI name: Copernicia cerifera (carnauba) wax) consists mostly of aliphatic esters (40 wt%), diesters of 4-hydroxycinnamic acid (21.0 wt%), ω-hydroxycarboxylic acids (13.0 wt%), and fatty alcohols (12 wt%). The compounds are predominantly derived from acids and alcohols in the C26-C30 range. It is distinctive for its high content of diesters and its methoxycinnamic acid. Among the hardest of natural waxes and is practically insoluble in water or ethyl alcohol, it is soluble by heating in ethyl acetate or xylene. Solid carnauba wax is a hard wax scraped from the leaves and leaf strams of carnauba palms, Copernicia cerifera. The carnauba wax comprises esters of C18-C32 fatty acids, and C28-C34 alcohols, also containing high amounts of hydroxy acid esters and melting points around 80 and 86 °C. Additionally, the solid carnauba wax usually comprises from about 80% by weight to about 85% by weight of fatty esters, from about 1% by weight to about 5% by weight of alcohols, from about 1% by weight to about 5% by weight of hydrocarbons, from about 1 % by weight to about 5% by weight of free acids, from about 1% by weight to about 6% by weight of resins, from about 1 % by weight to about 5% by weight of lactic components and from about 0.1 % by weight to about 2% by weight of humidity. Carnauba wax is mainly produced by mechanically recovering the coating from the leaves of a variety of palm trees that almost executively grow in northeastern Brazil. The composition of this wax was reported by Vandenburg et al., "The Structural Constituents of Carnauba Wax," J. Am. Oil Chem. Soc. 47:514-518 (1970) as follows: hydrocarbon (0.3-1%), aliphatic esters (38-40%), monohydric alcohols (10-12%), ω-hydroxy aliphatic esters (12-14%), p-methoxycinnamic aliphatic diesters (5-7%), p-hydroxycinnamic aliphatic diesters (20-23%), a triterpene type of diol (0.4%), and free fatty acids and other unknown constituents (5-7%). The esters have carbon numbers between 44 and 66 (Basson et al., "An Investigation of the Structures and Molecular Dynamics of Natural Waxes: II Carnauba Wax," J. Phys. D: Appl. Phys. 21:1429 (1988)), and the alkanes have carbon numbers between 16 and 34 (Vandenburg et al., "The Structural Constituents of Carnauba Wax," J. Am. Oil Chem. Soc. 47:514-518 (1970)). The presence of long chain esters is believed to contribute to the high melting point and hardness of carnauba wax.

The thermoplastic ethylene copolymer and the lubricant, such as the wax, may be separated by a preparative fractionation method. Typically this could be a separation of components based on molar mass, e.g. using size exclusion chromatography or based on crystallinity e.g. using Temperature Rising Elution Fractionation. The factions thus obtained may then be analysed using for example IR and / or NMR technique(s). The type of lubricant may for example be determined using GC-MS and comparing the retention time and molar mass and compare the fingerprint with a date base.

The skilled person will be able to select, depending on the sample to be tested, suitable sample preparation technique and method. The skilled person would know that if he/ she is faced with a finished product, he/she needs to obtain the polymeric composition before doing the density measurement. It is part of the skills of the skilled person to, depending on what the finished product looks like, determine how to obtain and prepare a sample of the polymeric composition and thereafter based on what the sample looks like select the appropriate way to measure the density. For example the polymeric composition may be scraped off from the composite elongated body and analysed. For example the polymeric composition may be scraped off from the lengthy body according to the invention and analysed.

An example of a commercially available carnauba wax is Aquacer 2650, available from BYK Netherlands B.V. An example of a Fischer-Tropsch wax is Aquacer 2700, available from BYK Netherlands B.V.

In an aspect, the lubricant is a polymeric dispersion. Typically, the polymeric dispersion is a dispersion of a polyurethane or an acrylic, or a hybrid of a polyurethane and an acrylic. An example of a polyurethane dispersion is NeoRez R-2180, available from DSM Coating Resins B.V. An example of a dispersion of an acrylic is NeoCryl A-668, available from DSM Coating Resins B.V.

In an aspect the present invention provides a composite elongated body, comprising high performance polyethylene HPPE filaments having a tenacity of at least 0.6 N/tex and a polymeric composition throughout the composite elongated body, wherein the polymeric composition comprises

a) a thermoplastic ethylene copolymer and
b) a wax selected from a polyethylene wax, a polypropylene wax, beeswax, carnauba wax, a Fischer-Tropsch wax and any combination thereof;

and wherein the thermoplastic ethylene copolymer is a copolymer of ethylene and wherein said polymeric composition has a peak melting temperature in the range from 40 to 140°C, measured in accordance with ASTM E794-06.

In a further aspect the ratio, on solid content basis, of the thermoplastic ethylene copolymer and the wax is from 11:1 to 1:10, preferably from 1:1 to 1:5, more preferably from 1:1.5 to 1:4, most preferably from 1:2 to 1:1.35.

In a further aspect the ratio, on solid content basis, of the thermoplastic ethylene copolymer and the wax is from 10:1 to 1:10, preferably from 5:1 to 1:5, more preferably from 4:1 to 1:4, most preferably from 3:1 to 1:3.

In a further aspect the ratio, on solid content basis, of the thermoplastic ethylene copolymer and the wax is from 1:1 to 1:10, preferably from 1:1 to 1:5, more preferably from 1:1.5 to 1:4, most preferably from 1:2 to 1: 1.35.

In an aspect the ratio, on solid content basis, of the thermoplastic ethylene copolymer and the wax is 1:1; 1:1.1; 1:1.2; 1:1.3; 1:1.4; 1:1.5; 1:1.6; 1:1.7; 1:1.8; 1:1.9; 1:2; 1:2.1; 1:2.2; 1:2.3; 1:2.4; 1:2.5; 1:2.6; 1:2.7; 1:2.8; 1:2.9; 1:3.0; 1:3.1; 1:3.2; 1:3.3; 1:3.4; 1:3.5; 1:3.6; 1:3.7; 1:3.8; 1:3.9; 1:4.0; 1:4.1; 1:4.2; 1:4.3; 1:4.4; 1:4.5; 1:4.6; 1:4.7; 1:4.8; 1:4.9; 1:5; 1:5.1; 1:5.2; 1:5.3; 1:5.4: 1:5.5; 1:5.6; 1:5.7; 1:5.8; 1:5.9; 1:6; 1:6.1; 1:6.2; 1:6.3; 1:6.4: 1:6.5; 1:6.6; 1:6.7; 1:6.8; 1:6.9; 1:7; 1:7.1; 1:7.2; 1:7.3; 1:7.4: 1:7.5; 1:7.6; 1:7.7; 1:7.8; 1:7.9; 1:8; 1:8.1; 1:8.2; 1:8.3; 1:8.4: 1:8.5; 1:8.6; 1:8.7; 1:8.8; 1:8.9; 1:9; 1:9.1; 1:9.2; 1:9.3; 1:9.4: 1:9.5; 1:9.6; 1:9.7; 1:9.8; 1:9.9; or 1:10.

In an aspect of the composite elongated body according to the invention the wax includes a synthetic wax such as PE or PP wax; an animal wax such as beeswax; a plant wax such as carnauba wax; or any combination thereof.

The thermoplastic ethylene copolymer herein is a semi-crystalline polymer has a peak melting temperature in the range from 40 to 140°C, measured in accordance with ASTM E794-06, considering the second heating curve at a heating rate of 10 K/min, on a dry sample. In an embodiment, the peak melting temperature of the thermoplastic ethylene copolymer is at least 50 or 60°C and at most 130 or 120°C. In an embodiment, the peak melting temperature of the thermoplastic ethylene copolymer is at least 50 °C and at most 130 °C. In an embodiment, the peak melting temperature of the thermoplastic ethylene copolymer is at least 60°C and at most 130 °C. In an embodiment, the peak melting temperature of the thermoplastic ethylene copolymer is at least 60°C and at most 120 °C. In an embodiment, the peak melting temperature of the thermoplastic ethylene copolymer is in the range from 50 to 120 °C. In an embodiment, the peak melting temperature of the thermoplastic ethylene copolymer is in the range from 50 °C to 120 °C. Such peak melting temperatures allow making the composite elongated body with the polymer composition melting and impregnating filaments without negatively affecting the mechanical properties of the high performance polyethylene filaments. The thermoplastic ethylene copolymer may have more than one peak melting temperature. In such case at least the highest melting peak of said melting temperatures falls within the above ranges. A second and/or further peak melting temperature of the copolymer may fall within or outside, preferably below, the temperature ranges. Multiple melting peak may be observed for example if the thermoplastic ethylene copolymer is a blend of different polymers.

In an aspect of the invention the thermoplastic ethylene copolymer comprises an ethylene-propylene co-polymer.

The thermoplastic ethylene copolymer may comprise the various forms of ethylene-propylene co-polymers, other ethylene copolymers with co-monomers such as 1-butene, isobutylene, as well as with hetero atom containing monomers such as acrylic acid, methacrylic acid, vinyl acetate, maleic anhydride, ethyl acrylate, methyl acrylate; generally $\alpha$-olefin and cyclic olefin copolymers, or blends thereof. Preferably the thermoplastic ethylene copolymer is a copolymer of ethylene which may contain as co-monomers one or more olefins having 2 to 12 C-atoms, in particular propylene, isobutene, 1-butene, 1-hexene, 4-methyl-1-pentene, 1-octene, acrylic acid, methacrylic acid and vinyl acetate.

Furthermore, the thermoplastic ethylene copolymer may be a functionalized polyethylene or alternatively the thermoplastic ethylene copolymer may comprise a functionalized polymer. Such functionalized polymers are often referred to as functional copolymers or grafted polymers, whereby the grafting refers to the chemical modification of the polymer backbone mainly with ethylenically unsaturated monomers comprising heteroatoms whereas functional copolymers refer to the copolymerization of ethylene with ethylenically unsaturated monomers. Preferably the ethylenically unsaturated monomer comprises oxygen and/or nitrogen atoms. Most preferably the ethylenically unsaturated monomer comprises a carboxylic acid group or derivatives thereof resulting in an acylated polymer, specifically in an acetylated polyethylene. Preferably, the carboxylic reactants are selected from the group consisting of acrylic, methacrylic, cinnamic, crotonic, and maleic, fumaric, and itaconic reactants. Said functionalized polymers typically comprise between 1 and 10 mass% of carboxylic reactant or more. The presence of such functionalization in the thermoplastic ethylene copolymer may substantially enhance the dispersability of the thermoplastic ethylene copolymer and/or allow a reduction of additives present for that purpose such as surfactants. Such composition may also be referred to as solvent-free. By solvent is herein understood a liquid in which at room temperature the thermoplastic ethylene copolymer is soluble in an amount of more than 1 mass% whereas a non-solvent is understood a liquid in which at room temperature the thermoplastic ethylene copolymer is soluble in an amount of less than 0.1 mass%.

The thermoplastic ethylene copolymer has a density as measured according to IS01183-04 in the range from 860 to 970 kg/m$^3$, preferably from 870 to 930 kg/m$^3$, more preferably from 870 to 920 kg/m$^3$, most preferably from 875 to 910 kg/m$^3$. In an aspect the density of the thermoplastic ethylene copolymer is in the range from 875 to 900 kg/m$^3$ as measured according to ISO1183-04. The inventors identified that thermoplastic ethylene copolymer with densities within said preferred ranges provide an improved balance between the mechanical properties of the composite elongated body and the processability of the coating composition, especially the dried coating composition during the process of the invention.

The thermoplastic ethylene copolymer is a semi-crystalline polymer having a peak melting temperature in the range from 40°C to 140°C and typically a heat of fusion of at least 5 J/g, measured in accordance with ASTM E794-06 considering the second heating curve at a heating rate of 10 K/min, on a dry sample and ASTM E793-85, respectively. The thermoplastic ethylene copolymer is a semi-crystalline polyolefin having a peak melting temperature in the range from 40 to 140°C and typically a heat of fusion of at least 5 J/g, measured in accordance with ASTM E794-06 considering the second heating curve at a heating rate of 10 K/min, on a dry sample and ASTM E793-85, respectively. In a preferred embodiment of the present invention the thermoplastic ethylene copolymer has a heat of fusion of at least 10 J/g, preferably at least 15 J/g, more preferably at least 20 J/g, even more preferably at least 30 J/g and most preferably at least 50 J/g. The inventors surprisingly found that with the increase heat of fusion the composite elongated body showed improved monofilament like character. The heat of fusion of the thermoplastic ethylene copolymer is not specifically limited by an upper value, other than the theoretical maximum heat of fusion for a fully crystalline polyethylene or polypropylene of about 300 J/g. The thermoplastic ethylene copolymer is a semi-crystalline product with a peak melting temperature in the specified ranges. Accordingly a reasonable upper limit for the thermoplastic ethylene copolymer heat of fusion is at most 200 J/g, preferably at most 150 J/g. In another embodiment the thermoplastic ethylene copolymer has a peak melting temperature in the range from 50 to 130°C, preferably in the range from 60 to 120°C, measured in accordance with ASTM E794-06, considering the second heating curve at a heating rate of 10 K/min, on a dry sample. Such preferred peak melting temperatures provide a more robust processing method to produce the composite elongated body in that the conditions for drying of the composite elongated body do need less attention while composite elongated bodies with good properties are produced. The thermoplastic ethylene copolymer may have more than one peak melting temperature. In such case at least the highest melting peak of said melting temperatures falls within the above ranges. A second and/or further peak melting temperature of the thermoplastic ethylene copolymer may fall within or outside the temperature ranges. Such may for example be the case when the thermoplastic ethylene copolymer is a blend of polymers.

The thermoplastic ethylene copolymer may have a modulus that may vary in wide ranges. A low modulus thermoplastic ethylene copolymer with for example a modulus of about 50 MPa, will provide very flexible composite elongated bodies with good strength properties. A high modulus thermoplastic ethylene copolymer with for example a modulus of about 500 MPa may provide composite elongated bodies such as monofilaments with improved structural appearance. Each application may have an optimum modulus for the thermoplastic ethylene copolymer, related to the specific demands during the use of the application. The modulus mat be determined as described in the METHODS herein.

The amount of polymeric composition present in the composite elongated body (coating percentage) may vary widely in function of the intended application of the composite elongated body and may be adjusted by the employed method of applying. The amount of polymeric composition in the composite elongated body according to the invention may be determined as described in the METHOD section herein. In an aspect of the invention the composite elongated body comprises an amount of polymeric composition in the range of from 5 mass% to 45 mass% based on the total weight of the composite elongated body. In another aspect of the invention comprises an amount of polymeric composition in the range of from 8 mass% to 25 mass% based on the total weight of the composite elongated body, preferably the composite elongated body comprises an amount of polymeric composition in the range of from 12 mass% to 20 mass% based on the total weight of the composite elongated body.

In the composite elongated body the surface of the HPPE filaments is substantially (in an aspect at least 50%, at least 60%, at least 70%, at least 90%, at least 95%, or at least 98%) coated (i.e. covered) with the polymeric composition. In an aspect of the composite elongated body the surface of the HPPE filaments is from 70% to 100% coated (i.e. covered) with the polymeric composition. Alternatively one may say the polymeric composition in the composite elongated body is present as a sizer on substantially the entire surface of the HPPE filament.

In an aspect the composite elongated body according to the invention comprises:

    a) 55-95 mass% of high-performance polyethylene filaments;
    b) 5-45 mass% of the thermoplastic ethylene copolymer having a peak melting temperature measured according to ASTM E794-06 of 40-140 °C;
    c) 5-45 mass% lubricant; and
    d) 0-5.0 mass% of additives;

wherein the sum of components a)-d) is 100 mass%.

In an aspect the composite elongated body according to the invention comprises:

    a) 70-85 mass% of high-performance polyethylene filaments
    b) 7.5-30 mass% of the thermoplastic ethylene copolymer having a peak melting temperature measured according to ASTM E794-06 of 40-140 °C;
    c) 7.5-25 mass% lubricant; and
    d) 0-5.0 mass% of additives;

wherein the sum of components a)-d) is 100 mass%.

In an aspect the polymeric composition forms a uniform film on the surface of the HPPE filaments. This may be observed via visual analysis e.g. by using SEM on a cross section of the composite elongated body and determining which % of the surface is covered with the coating composition, while using a SEM measurement window of at least 3x the diameter of the filament. Alternatively by making a SEM at 10 locations (evenly distributed over the cross section) to determine which % of the surface is covered with the coating composition.

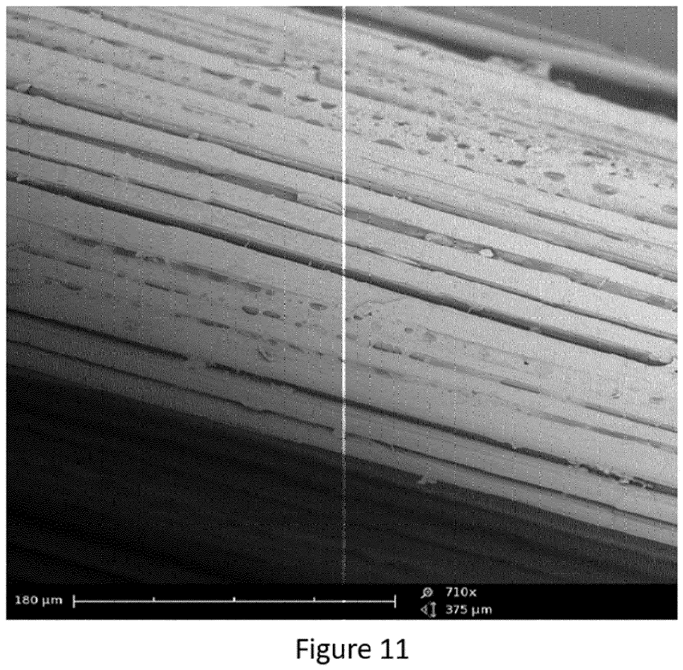

In an aspect the polymeric composition forms a uniform film on the surface of the HPPE filaments. This may be further be observed via visual analysis e.g. by using SEM on the outer surface of the composite elongated body (this is illustrated in figure 11)

The polymeric composition has a density as measured according to ISO 1183-04 in the range from 860 to 970 kg/m$^3$, preferably from 870 to 930 kg/m$^3$, more preferably from 870 to 920 kg/m$^3$, most preferably from 875 to 910 kg/m$^3$. In an embodiment the density of the polymeric composition is in the range from 875 to 900 kg/m$^3$ as measured according to ISO1183-04. The inventors identified that a polymeric composition with a density within said ranges provide a good balance between the mechanical properties of the composite elongated body and the processability of the coating composition comprising the thermoplastic ethylene copolymer and the lubricant during manufacturing the composite elongated body of the invention.

In an embodiment the composite elongated body according to according to the invention the lubricant is as described herein.

In the context of the present invention HPPE filaments are understood to be polyethylene filaments with improved mechanical properties such as tenacity. In a preferred embodiment the high performance polyethylene filaments are polyethylene filaments with a tenacity of at least 0.6 N/tex, preferably at least 1.0 N/tex, more preferably at least 1.5 N/tex, more preferably at least 1.8 N/tex, even more preferably at least 2.5 N/tex and most preferably at least 3.5 N/tex.

In a preferred embodiment the high performance polyethylene filaments are polyethylene filaments with a tenacity of at most 6.0 N/tex, preferably at most 5.5 N/tex and more preferably at most 5.0 N/tex Preferred polyethylene is high molecular weight (HMWPE) or ultrahigh molecular weight polyethylene (UHMWPE). Best results were obtained when the high performance polyethylene filaments comprise ultra-high molecular weight polyethylene (UHMWPE) and have a tenacity of at least 2.0 N/tex, more preferably at least 3.0 N/tex. In an aspect the high performance polyethylene filaments are ultra-high molecular weight polyethylene (UHMWPE) filaments having a tenacity in the range from 2.0 to 6.0 N/tex. In an aspect the high performance polyethylene filaments are ultra-high molecular weight polyethylene (UHMWPE) filaments having a tenacity in the range from 2.5 to 5.0 N/tex.

Preferably the composite elongated body of the present invention comprises HPPE filaments comprising high molecular weight polyethylene (HMWPE) or ultra-high molecular weight polyethylene (UHMWPE) or a combination thereof, preferably the HPPE filaments substantially consist of HMWPE and/or UHMWPE.

In the context of the present invention the expression 'substantially consisting of HMWPE and/or UHMWPE' has the meaning of 'may comprise a minor amount of further species' wherein minor is up to 5 mass%, preferably of up to 2 mass% of said further species or in other words 'comprising more than 95 mass% of' preferably 'comprising more than 98 mass% of' HMWPE and/or UHMWPE based on the filaments.

In an aspect the composite elongated body of the present invention comprises high molecular weight polyethylene (HMWPE) filaments with a tenacity of at least 0.6 N/tex, preferably at least 1.0 N/tex, more preferably at least 1.5 N/tex, more preferably at least 1.8 N/tex, even more preferably at least 2.5 N/tex and most preferably at least 3.5 N/tex. Best results were obtained when the high performance polyethylene filaments comprise ultra-high molecular weight polyethylene (UHMWPE) and have a tenacity of at least 2.0 N/tex, more preferably at least 3.0 N/tex. In an aspect the composite elongated body of the present invention comprises high molecular weight polyethylene (HMWPE) filaments with a tenacity in the range from 2.0 to 5.5 N/tex. In an aspect the composite elongated body of the present invention comprises high molecular weight polyethylene (HMWPE) filaments with a tenacity in the range from 2.0 to 5.0 N/tex.

In an embodiment the composite elongated body according to the invention comprises at least two filaments. In an embodiment the composite elongated body according to the invention comprises at least at least 20 filaments, preferably at least at least 100 filaments, more preferably at least 200 filaments. In an embodiment the composite elongated body according to the invention comprises at most 1500 filaments, preferably at most 1200 filaments, more preferably at most 5000 filaments.

In an aspect the composite elongated body according to the inventions comprises from 2 to 1x10$^9$ (UHMWPE) filaments having a tenacity in the range from 2.0 to 5.0 N/tex. In an aspect the composite elongated body according to the inventions comprises from 2 to 1x10$^7$ (UHMWPE) filaments having a tenacity in the range from 2.0 to 5.0 N/tex.

In the context of the present invention the polyethylene (PE) of the filament may be linear or branched, whereby linear polyethylene is preferred. Linear polyethylene is herein understood to mean polyethylene with less than 1 side chain per 100 carbon atoms, and preferably with less than 1 side chain per 300 carbon atoms; a side chain or branch generally containing at least 10 carbon atoms. Side chains may suitably be measured by FTIR.

The PE of the filament is preferably of high molecular weight with an intrinsic viscosity (IV) of at least 2 dl/g; more preferably of at least 4 dl/g, most preferably of at least 8 dl/g. Such polyethylene with IV exceeding 4 dl/g are also referred to as ultra-high molecular weight polyethylene (UHMWPE). Intrinsic viscosity is a measure for molecular weight that can more easily be determined than actual molar mass parameters like number and weigh average molecular weights (Mn and Mw). Typically the IV of the PE of the filament is at most 50 dl/g.

In an aspect of the present invention the UHMWPE has an intrinsic viscosity (IV) of at least 4 dL/g and comprises at least 0.3 short chain branches (SCB) per thousand total carbon atoms. In a further aspect the short chain branches (SCB) originate from a co-monomer in the UHMWPE wherein the co-monomer is selected from the group consisting of alpha-olefins with at least 3 carbon atoms, cyclic olefins having 5 to 20 carbon atoms and linear, branched or cyclic dienes having 4 to 20 carbon atoms.

In an aspect of the present invention the SCB are $C_1$-$C_{20}$-hydrocarbyl groups, preferably the $C_1$-$C_{20}$-hydrocarbyl group is selected from the group consisting of methyl, ethyl, propyl, butyl, pentyl, hexyl, octyl and cyclohexyl, isomers thereof and mixtures thereof. In an aspect of the present invention the short chain branches (SCB) originate from a co-monomer in the UHMWPE wherein the co-monomer is selected from the group consisting of alpha-olefins with at least 3 carbon atoms, cyclic olefins having 5 to 20 carbon atoms and linear, branched or cyclic dienes having 4 to 20 carbon atoms. In an aspect of the present invention the SCB are $C_1$-$C_{20}$-hydrocarbyl groups, preferably the $C_1$-$C_{20}$-hydrocarbyl group is selected from the group consisting of methyl, ethyl, propyl, butyl, pentyl, hexyl, octyl and cyclohexyl, isomers thereof and mixtures thereof.

The HPPE filaments in the present invention may be obtained by various processes, for example by a melt spinning process, a gel spinning process or a solid state powder compaction process. A preferred method for the production of the filaments used in the invention comprises melt spinning which includes feeding the polyethylene to an extruder, extruding a molded article at a temperature above the melting point thereof and drawing the extruded filaments below its melting temperature. If desired, prior to feeding the polymer to the extruder, the polymer may be mixed with a suitable liquid compound, for instance to form a gel, such as is preferably the case when using ultra high molecular weight polyethylene. In a method for the production of the filaments used in the invention the filaments used in the invention are prepared by a gel spinning process. A suitable gel spinning process is described in for example GB-A-2042414, GB-A-2051667, EP 0205960 A and WO 01/73173 A1. In short, the gel spinning process comprises preparing a solution of a polyethylene of high intrinsic viscosity, extruding the solution into a solution-filaments at a temperature above the dissolving temperature, cooling down the solution-filaments below the gelling temperature, thereby at least partly gelling the polyethylene of the filaments, and drawing the filaments before, during and/or after at least partial removal of the solvent.

Creep is a parameter known in the art and it typically depends on the tension and the temperature applied on a material. Under constant loading HPPE filaments show an irreversible deformation (creep) behavior that is strongly dependent upon load and temperature. High tension and high temperature values typically promote fast creep behavior. The creep may be (partially) reversible or irreversible on unloading. The rate of time dependent deformation is called creep rate and is a measure of how fast the filaments are undergoing said deformation. The initial creep rate may be high but the creep deformation may decrease during constant loading to a final creep rate that may be negligible (e.g. close to zero value).

In an embodiment of the composite elongated body according to the invention the HPPE filaments comprise ultrahigh molecular weight (UHMWPE) having an intrinsic viscosity (IV) of at least 4 dL/g and comprising at least 0.3 short chain branches per thousand total carbon atoms.

In an embodiment of the composite elongated body according to the invention the HPPE filaments comprise ultrahigh molecular weight (UHMWPE) having an intrinsic viscosity (IV) in the range from 4 dL/g to 50 dL/g and comprising from 0.3 to 10 short chain branches per thousand total carbon atoms.

In an embodiment the high performance polyethylene HPPE filaments are provided as a yarn, said yarn comprising at least two HPPE filaments having a tenacity of at least 0.6 N/tex. In an embodiment the composite elongated body comprises a yarn comprising high performance polyethylene HPPE filaments having a tenacity of at least 0.6 N/tex, and wherein the yarn has a minimum creep rate of at most $1 \times 10^{-5}$ % per second as measured at a tension of 900 MPa and a temperature of 30°C as described in the METHOD section herein.

In an embodiment of the composite elongated body according to the invention the yarn has a minimum creep rate of at most $4 \times 10^{-6}$ % per second, preferably at most $2 \times 10^{-6}$ % per second, measured at a tension of 900 MPa and a temperature of 30°C as described in the METHOD section herein.

In an embodiment of the composite elongated body according to the invention the yarn has a minimum creep rate is at least about $1 \times 10^{-10}$ % per second as measured at a tension of 900 MPa and a temperature of 30°C as described in the METHOD section herein.

In an embodiment of the composite elongated body according to the invention the polymeric composition covers at least 50% of the total surface of the HPPE filaments of the composite elongated body, preferably by making an electron microscopy, such as a SEM (Scanning Electron Microscopy), analysis of the surface and/or of a cross section of the composite elongated body. Preferably the polymeric composition covers at least 70% of the total surface of the HPPE filaments of the composite elongated body. In an aspect the polymeric composition covers at least 80% of the total surface of the HPPE filaments of the composite elongated body. In a further aspect at least 90% of the total surface of the HPPE filaments of the composite elongated body is covered by the polymeric composition.

The present invention further provides a method of manufacturing a composite elongated body comprising the steps:

a) providing a coating composition, wherein the composition comprises

- a thermoplastic ethylene copolymer; and
- a lubricant;

b) providing a yarn comprising at least two HPPE filaments having a tenacity of at least 0.6 N/tex;
c) applying the coating composition to the yarn to obtain a coated yarn; and
d) elevating the temperature of the coated yarn to obtain the composite elongated body,

wherein the high molecular weight thermoplastic ethylene copolymer is a copolymer of ethylene and wherein said thermoplastic ethylene copolymer has a peak melting temperature in the range from 40 to 140°C, measured in accordance with ASTM E794-06.

In one embodiment in step d) elevating the temperature causes the coating composition to dry and the thermoplastic ethylene copolymer to melt.

In an embodiment the coating composition herein, is an aqueous polymeric dispersion. By aqueous dispersion is understood that particles of the polymeric composition are dispersed in water, water is acting as non-solvent.

The thermoplastic ethylene copolymer present in the applied coating composition, such as an aqueous dispersion, and ultimately present in the obtained composite elongated body of the present invention is a copolymer of ethylene, as described herein.

The concentration of thermoplastic ethylene copolymer in the coating composition may widely vary and is mainly limited by the capability to formulate a stable dispersion of the thermoplastic ethylene copolymer in water. A typical range of concentration is from 2 to 80 mass% of thermoplastic ethylene copolymer in water, whereby the weight percentage is the weight of thermoplastic ethylene copolymer in the total weight of aqueous dispersion. Preferred concentrations are from 4 to 60 mass%, more preferably from 5 to 50 mass%, most preferably from 6 to 40 mass%. Another preferred concentration of the thermoplastic ethylene copolymer in the dispersion is at least 15 mass%, preferably at least 18 mass% and even more preferably at least 20 mass%. In another preferred embodiment the concentration of the thermoplastic ethylene copolymer in the coating composition is from 10 to 50 mass%, preferably from 15 to 40 mass%, most preferably from 18 mass% to 30 mass%. Such preferred higher concentrations of thermoplastic ethylene copolymer may have the advantage of a providing a composite elongated body with higher concentration while reducing the time and energy required for the removal of the water. For some applications a low concentration coating composition, having from 2 to 10 mass% of the thermoplastic ethylene copolymer in the dispersion, may be advantageous for example to increase the wetting and impregnation speed with low viscous suspensions. Last but not least the coating composition concentration and quantity should be chosen to provide a composite elongated body with the required amounts of polymeric composition present in said body.

The coating composition may further comprise additives such as ionic or non-ionic surfactants, tackyfying resins, stabilizers, anti-oxidants, colorants or other additives modifying the properties of the polymeric composition or of the prepared composite elongated body.

The application of the coating composition to a yarn comprising the HPPE filaments may be done by methods known in the art and may depend amongst others on the moment the composition is added to the yarn, the nature of the filaments, the concentration and viscosity of the coating composition. The coating composition may for example be applied to the yarn by spraying, dipping, brushing, transfer rolling or the like, especially depending on the intended amount of coating polymeric composition present in the composite elongated body of the invention.

Once the coating composition is applied to the yarn comprising at least two HPPE filaments, the coated yarn is exposed to elevated temperature, for example a hot air oven. In an aspect the coated yarn is at least partially dried at elevated temperature, for example a hot air oven.

In an embodiment of the method of manufacturing a composite elongated body according to the invention during step d) the thermoplastic ethylene copolymer melts.

In an embodiment of the method of manufacturing a composite elongated body according to the invention exposing the coated yarn to elevated temperature in step d) causes the coating composition to dry and the thermoplastic ethylene copolymer to melt.

In an embodiment of the method of manufacturing a composite elongated body according to the invention during step d) the coating composition is dried and the thermoplastic ethylene copolymer melts.

Drying involves the removal, e.g. the evaporation, of at least a fraction of the water present in the coated yarn. Preferably the majority, more preferably essentially all water is removed during the drying, optionally in combination with other components. Drying, i.e. the removal of water, may be done by methods known in the art. Typically the evaporation of water involves an increase of the temperatures of the coated yarn up to or above the boiling point of water. The temperature increase may be assisted or substituted by a reduction of the pressure and or combined with a continuous refreshment of the surrounding atmosphere. Typical drying conditions are temperatures of between 40 and 130°C, preferably 50 and 120°C.

The step d) of exposing the coated yarn to elevated temperature in method of the invention may comprise heating the filaments comprising the coating composition to a temperature in the range from the peak melting temperature of the thermoplastic ethylene copolymer to 153°C. Such heating may be performed before, during and/or after the partially drying the coating composition. Typically heating the filaments comprising the coating composition to a temperature in the range from the peak melting temperature of the thermoplastic ethylene copolymer to 153°C is done during and/or after at least partially drying the coating composition. In an aspect this heating is done after at least partially drying the coating composition. Heating may be carried out by keeping the coated yarn for a dwell time in an oven set at an elevated temperature, subjecting the impregnated filaments to heat radiation or contacting the body with a heating medium such as a heating fluid, a heated gas stream or a heated surface. In an aspect heating is done in a hot air oven. Preferably, the elevated temperature is at least 2°C, preferably at least 5°C, most preferably at least 10°C above the peak melting temperature of the thermoplastic ethylene copolymer. In an aspect the elevated temperature is from 2°C to 100 °C above the peak melting temperature of the thermoplastic ethylene copolymer. At such temperature the thermoplastic ethylene copolymer melts and can adhere to the filaments and fuse the filaments together in a monofilament-like structure, and the composite elongated body is be obtained. In an aspect the elevated temperature is at most 153°C, preferably at most 150°C, more preferably at most 145°C and most preferably at most 140°C. This upper limit is also referred to herein as maximum temperature. In an aspect the dwell time is preferably between 2 and 100 seconds, more preferably between 3 and 60 seconds, most preferably between 4 and 30 seconds.

In a preferred embodiment of the method of manufacturing a composite elongated body, the heating of the coated yarn overlaps, more preferably is combined with the drying step of the coating composition. It may prove to be practical to apply a temperature gradient in step d) to the coated yarn whereby the temperature is raised from about room temperature to the maximum temperature of the heating step over a period of time during which the coated yarn will undergo a continuous process from drying of the coating composition to at least partially melting of the thermoplastic ethylene copolymer. In an aspect of the method of manufacturing a composite elongated body in step d) the coated yarn undergoes a continuous process from drying of the coating composition to at least partial melting of the thermoplastic ethylene copolymer. In an aspect of this method in step d) the elevated temperature is a temperature gradient with an increasing temperature that falls in the range from 20°C to a temperature at least 2°C, preferably at least 5°C, most preferably at least 10°C above the peak melting temperature of the thermoplastic ethylene copolymer. In an aspect of this method in step d) the elevated temperature is a temperature gradient having a temperature that increases from a starting temperature in the range from 20°C to 153°C to a higher end temperature in the range from 20°C to 153°C.

In a preferred embodiment of the method of manufacturing a composite elongated body upon completion of steps a), b), c) and d) the polymeric composition is present throughout the composite elongated body. In a preferred embodiment of the method of manufacturing a composite elongated body upon completion of steps a), b), c) and d) the thermoplastic ethylene copolymer and the lubricant are present throughout the composite elongated body. In a preferred embodiment of the method of manufacturing a composite elongated body upon completion of steps a), b), c) and d) the thermoplastic ethylene copolymer and the wax are present throughout the composite elongated body.

In an aspect the composite elongated body a composite elongated body contains more than 50 mass% UHMWPE as described herein. In an aspect the composite elongated body a composite elongated body comprises from 55 to 95 mass% UHMWPE as described herein. A preferred embodiment of the present invention concerns a composite elongated body containing more than 70 mass% UHMWPE as described herein, preferably 80 mass% of UHMWPE, preferably more than 90 mass% of UHMWPE, whereby the mass% are expressed as mass of UHMWPE to the total mass of the composite elongated body. In a yet preferred embodiment, the UHMWPE present in the composite elongated body is comprised in the HPPE filaments of said composite elongated body. In an embodiment the composite elongated body a composite elongated body comprises from 55 to 95 mass% UHMWPE in the form of HPPE filaments. In an embodiment the composite elongated body according to the invention, said composite elongated body comprises at least 80 mass% UHMWPE present in the form of HPPE filaments. In an embodiment the composite elongated body according to the invention, said composite elongated body comprises at least 85 mass% UHMWPE present in the form of HPPE filaments. In an embodiment the composite elongated body according to the invention, said composite elongated body comprises from 85 mass% to 95 mass% UHMWPE present in the form of HPPE filaments.

The present invention also relates to the composite elongated body produced with the method of manufacturing a composite elongated body according to the invention. Such composite elongated body comprises HPPE filaments as defined herein and a polymeric composition comprising a thermoplastic ethylene copolymer and a lubricant as defined herein, wherein the thermoplastic ethylene copolymer is a copolymer of ethylene as defined herein. Such composite elongated body is subject to the preferred embodiments and potential advantages as discussed above or below in respect of the present inventive method, whereas the preferred embodiments for the composite elongated body potentially apply vice versa for the inventive method of manufacturing the composite elongated body.

The present invention further relates to a lengthy body comprising the composite elongated body according to the invention as described herein. The term lengthy body includes but is not limited to a strand, a cable, a cord, a rope, a belt, a strip, a hose and a tube. In an aspect the lengthy body comprises from 2 to 100.000 composite elongated bodies according to the invention. In an aspect the lengthy body comprises from 3 to 10.000 composite elongated bodies according to the invention. In an aspect the lengthy body comprises from 5 to 1000 composite elongated bodies according to the invention. A lengthy body herein is herein understood an elongated body, the length dimension of which is much greater than the transverse dimensions of width and thickness or diameter. Preferably said length dimension is at least 10 times, more preferably at least 20 times even more preferably at least 50 times and most preferably at least 100 times greater than the width or thickness dimension of the lengthy body, whichever is larger. The cross-sectional shape of the lengthy body may be from round or almost round, oblong or rectangular shape.

In its simplest form the lengthy body comprises 2 or more composite elongated bodies lying side by side without being twisted about each other. Such thread of untwisted composite elongated bodies may also be called a bundle and as elaborated above may have a variety of cross-sectional shapes. The composite elongated bodies in a bundle will substantially be oriented in a single direction, the length direction of the lengthy body. Furthermore, a thread may be comprised of two or more twisted composite elongated bodies. The lengthy body according to the invention typically demonstrates an improved abrasion resistance. An improved abrasion resistance may be demonstrated in a fairlead abrasion test, such as the fairlead test described in the METHOD section herein. The lengthy body according to the invention typically demonstrates an improved bending performance. An improved bending performance may be demonstrated in a Cyclic Bending Over Sheave (CBOS) test, such as a CBOS test described in THE METHODS herein.

The present invention relates to a method of manufacturing a lengthy body comprising the step of assembling at least two composite elongated bodies as defined herein to form the lengthy body, preferably the lengthy body is a rope, such as a laid or braided rope.

The present invention relates to a rope comprising at least three composite elongated bodies according to the invention. In an aspect the rope comprises from 3 to 1000 composite elongated bodies according to the invention. In an aspect the rope comprises from 3 to 10.000 composite elongated bodies according to the invention. In an aspect the rope comprises from 3 to 100.000 composite elongated bodies according to the invention. The rope according to the invention demonstrates an improved abrasion resistance. An improved abrasion resistance may be demonstrated in a fairlead abrasion test, such as the fairlead test described in the METHOD section herein. In an aspect the rope according to the invention demonstrates an improved abrasion resistance as compared with a reference rope, preferably wherein the reference rope is a rope without the polymeric composition as defined herein. In an aspect the rope according to the invention demonstrates an improved abrasion resistance as compared with a reference rope wherein the reference rope is a rope comprising a thermoplastic ethylene copolymer as defined in any preceding embodiment and lacking the lubricant as defined herein.

The rope according to the invention typically demonstrates an improved bending performance. An improved bending performance may be demonstrated in a Cyclic Bending Over Sheave (CBOS) test, such as a CBOS test described in THE METHODS herein. In an aspect the rope according to the invention demonstrates an improved bending performance as compared with a reference rope, preferably wherein the reference rope is a rope without the polymeric composition as defined herein. In an aspect the rope according to the invention demonstrates an improved bending performance as compared with a reference rope wherein the reference rope is a rope comprising a thermoplastic ethylene copolymer as defined in any preceding embodiment and lacking the lubricant as defined herein.

In an embodiment the rope according to the invention comprises the composite elongated body according to the invention in an amount in the range from 80 mass% to 100 mass% based on the total weight of the rope. In a preferred aspect 90 mass% to 100 mass% based on the total weight of the rope. The total weight of the rope here refers to the weight of the rope without a cover if any. In an aspect the rope consists of assembled composite elongated bodies according to the invention.

In a preferred embodiment of the rope according to the invention, the rope comprises ultra-high molecular weight polyethylene (UHMWPE) filaments, more preferably gel spun UHMWPE filaments. In a further aspect, at least 50 mass%, more preferably at least 80 mass% and even more preferably at least 90 mass% and most preferably all of the high performance polyethylene filaments present in the rope are UHMWPE filaments.

The rope according to the invention may be of various constructions, including laid, braided, parallel, and wire rope-like constructed ropes. In general a rope is composed of strands, typically laid or braided strands. The number of strands in the rope may also vary widely, but is generally at least 3 and preferably at most 16, to arrive at a combination of good performance and ease of manufacture. The number of strands in a braided rope according to the invention is preferably at least 3. There is no upper limit to the number of strands, although in practice ropes will generally have no more than 32 strands. Particularly suitable are ropes of an 8- or 12-strand braided construction. Such ropes provide a favourable combination of tenacity and resistance to bend fatigue, and may be made economically on relatively simple machines.

Typically a rope has a cross-section that is about circular or round, but also a rope having an oblong cross-section, meaning that the cross-section of a tensioned rope shows a flattened, oval, or even (depending on the number of primary strands) an almost rectangular form, is known. Such oblong cross-section preferably has an aspect ratio, i.e. the ratio of the larger to the smaller diameter (or width to thickness ratio), in the range of from 1.2 to 4.0.

A preferred embodiment of the present invention concerns a lengthy body comprising the composite elongated body according to the invention and containing more than 70 mass% UHMWPE as described herein, preferably 80 mass% of UHMWPE, preferably more than 90 mass% of UHMWPE, whereby the mass% are expressed as mass of UHMWPE to the total mass of the lengthy body. In a yet preferred embodiment, the UHMWPE present in the lengthy body is comprised in the HPPE filaments of said composite elongated body.

In an embodiment the lengthy body according to the invention is constructed from composite elongated bodies according to the invention.

The composite elongated body according to the invention may for example be used in the manufacture of a lengthy body such as a rope. The composite elongated body according to the invention may for example be used in the manufacture of an article such as a net, for example a fishing net or an aquaculture net (typically to grow fish); a sling, such as a round sling, a webbing sling or a rope sling; a synthetic chain link; a synthetic chain or a tendon.

Therefore an aspect of the present invention includes an article according to the invention comprising the composite elongated body according to the invention, such as a net (for example a fishing net or an aquaculture net comprising the composite elongated body), a sling, a synthetic chain or a tendon comprising the composite elongated body according to the invention. The article according to the invention typically demonstrates an improved abrasion resistance and / or an improved overall durability. The article according to the invention may comprise from 2 to 100.000 composite elongated bodies according to the invention.

In an embodiment of the present invention the article according to the invention comprises the composite elongated body according to the invention and contains more than 70 mass% UHMWPE, preferably 80 mass% of UHMWPE, preferably more than 90 mass% of UHMWPE, whereby the mass% are expressed as mass of UHMWPE to the total mass of the article. In a yet preferred embodiment, the UHMWPE present in the article is comprised in the HPPE filaments of said article. In an embodiment the article is constructed from composite elongated bodies.

A synthetic chain link according to the invention comprises at least one composite elongated body according to the invention. In an embodiment the synthetic chain link according to the invention comprises from 2 to 10.000 composite elongated bodies according to the invention.

A synthetic chain according to the invention comprises at least one composite elongated body according to the invention. In an embodiment the synthetic chain according to the invention comprises at least two interconnected synthetic chain links according to the invention. In an embodiment the synthetic chain according to the invention comprises from 2 to 10.000 interconnected synthetic chain links according to the invention. In an embodiment the synthetic chain according to the invention comprises from 2 to 1000 interconnected synthetic chain links according to the invention. In an embodiment the synthetic chain according to the invention comprises at least two interconnected synthetic chain links wherein at least a part of the links comprise the composite elongated body according to the invention. In an embodiment the synthetic chain according to the invention comprises a plurality of interconnected chain links wherein at least a part of the links comprise the composite elongated body according to the invention. In an embodiment the synthetic chain according to the invention comprises a plurality of interconnected chain links wherein each link comprises the composite elongated body according to the invention. The chain according to the invention is typically suitable to moor or anchor boats, to lash cargo in road, rail, water and air transportation and suitable for conveying, hoisting, suspending and lifting applications. The synthetic chain according to the invention according to the invention may have an improved resistance to particle ingress, resistance to abrasion resistance and / or an improved overall durability.

In an aspect the article according to the invention is a personal protection item (such as a helmet, a body panel) or a glove comprising at least one composite elongated body as described herein.

The present invention further relates to a belt comprising at least three composite elongated bodies according to the invention. A belt is a loop of flexible material generally used to link two or more rotating shafts mechanically, most often parallel. Belts may be used as a source of motion, to transmit power efficiently or to track relative movement. In an aspect the belt according to the invention demonstrates an improved bending performance as compared with a reference belt, preferably wherein the reference belt is a belt without the polymeric composition as defined herein. In an aspect the belt according to the invention demonstrates an improved bending performance as compared with a reference belt wherein the reference belt is a belt comprising a thermoplastic ethylene copolymer as defined in any preceding embodiment and lacking the lubricant as defined herein. In an aspect the article according to the invention is a personal protection item (such as a helmet, a body panel) or a glove comprising from 1 to 5.000 composite elongated bodies as described herein. In an aspect the article according to the invention is a personal protection item (such as a helmet, a body panel) or a glove comprising from 1 to 10.000 composite elongated bodies as described herein.

The present invention further relates to a net, such as a net for fishing or fish farming, comprising at least one composite elongated body as described herein. The present invention further relates to a net comprising at least three composite elongated bodies according to the invention. The net may comprise up to 1000 composite elongated bodies according to the invention. A practical upper limit of the number of composite elongated bodies in the net is eight, preferably seven, six or five. A net herein may comprise 1, 2, 3, 4, 5, 6, 7 or 8 composite elongated bodies according to the invention.

A benefit of a lubricant in the polymeric composition may include improvement in long term use of nets comprising the composite elongated body, when used in an aquatic environment. Without wishing to be bound to any theory, enhanced durability may be caused by reduced abrasion between filaments and composite elongated bodies in the at least one cord or between cords of the net.

In embodiments of present disclosure, the net is to be applied in fish farming, and is also called an aquaculture net. Such nets are known to the skilled person, and may have widely varying dimensions, mass, construction, and number and type of cords. The cords of present net can be joined by techniques such as knots or clamps, but the joints may also be made as integral part of the process of net making from cords. Typically, the net will have a mesh size of at least 8 mm, preferably at least 10, at least 12, at least 14 or at least 16 mm. The maximum mesh size of the net of the present disclosure is not particularly limited, and may be at most 500 mm, preferably at most 400, at most 300, at most 200, at most 100, at most 90, at most 80, at most 70, or at most 60 mm depending for example on the type of fish and conditions of use. Mesh size of a knotted net is generally determined as the full mesh knot to knot distance, i.e. the distance from center to center of 2 adjacent knots of a mesh. In case of a knotless net, e.g. made using interbraiding, the mesh size is the distance between two joints as measured across the space of a mesh taking the distance between two opposite joints as further described in the METHODS.

The construction of the cords of the nets of the invention are not specifically limited and may be amongst others braided, laid or parallel arrangements of a single or multiple composite elongated bodies.

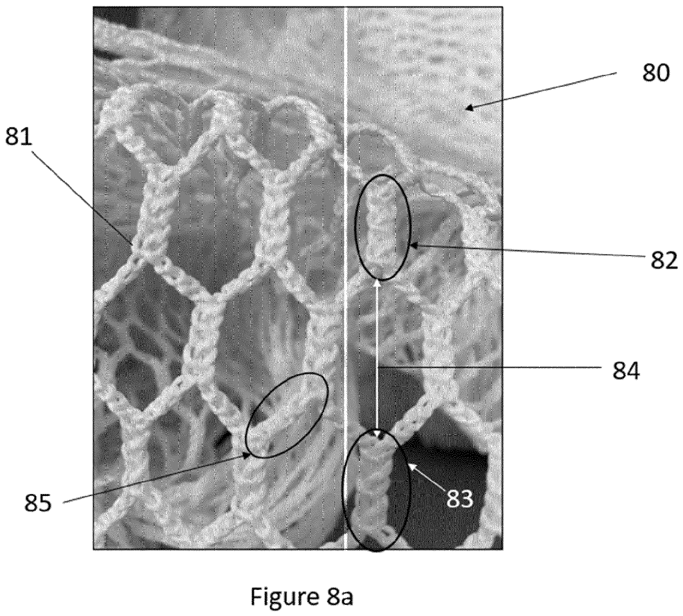

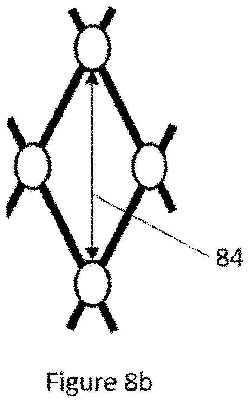

In an embodiment, the net according to the invention is a knitted knotless net, often referred to as Raschel net, comprising at least one composite elongated body according to the invention. In an embodiment, the net according to the invention is a knitted knotless net, often referred to as Raschel net, comprising from 1 to 1000 composite elongated body according to the invention. In such embodiment, the knotless net is made by a knitting technique, such as by warp knitting using a Raschel frame. Figure 8a shows as an example a part of such a knitted knotless net, having hexagonal meshes and joints formed by intermingled cords. In an aspect the net comprises cords joined in a net mesh, wherein each cord comprises one or more composite elongated bodies according to the invention. In another embodiment, the net according to the invention is a Raschel net, comprising at least one cord, the cord comprising at least one composite elongated body according to the invention, preferably one, two or three composite elongated bodies. In another embodiment, the net according to the invention is a Raschel net, comprising at least two cords, each cord comprising one, two or three composite elongated bodies, for example at least one cord as the warp yarn and at least one cord as the weft yarn. In another embodiment, the net is a knitted knotless net made from three composite elongated bodies. A practical upper limit of the number of composite elongated bodies per cord is three. If the cords in a Raschel net, comprise more than on composite elongated body, such cord usually comprises parallel composite elongated bodies.

In embodiments the net is a braided net, preferably a braided knotless net, wherein the cords comprise at least one composite elongated body, such as 1 composite elongated body or 2 or 3 composite elongated bodies as described herein. In embodiments the net is a braided net, preferably a braided knotless net, wherein the cords have 4 composite elongated bodies, or 8, 12, 16, 20 or 24 composite elongated bodies.

In one embodiment, the net construction comprises cords that are braids comprising at least three composite elongated bodies. Braids and braiding processes are well known. Commonly a braid is formed by crossing over a number of elongated bodies diagonally so that each elongated body passes alternately over and under one or more of the other elongated bodies to form a coherent cord.

An alternative but also beneficial net construction, the construction comprises twisted cords instead of braided cords, in which two composite elongated bodies are twisted together to form a cord.

The cords of the net of the invention can be joined by standard techniques such as knots, shackles or interbraiding. It is preferred that the net of the invention is a knotless net. A knotless construction of the net typically results in a further improvement of the net robustness against pressure washing and especially retention of the mesh breaking strength as compared to a construction in which the cords are joint by other means such as knots or shackles.

The present invention also relates to a crane. A crane is a type of machine, generally equipped with a rope or chain, and sheaves, that may be used both to lift and lower materials and to move them horizontally. It is mainly used for lifting heavy things and transporting them to other places. Cranes are commonly employed in the transport industry for the loading and unloading of freight, in the construction industry for the movement of materials, and in the manufacturing industry for the assembling of heavy equipment. The crane according to the invention comprises a sheave and the lengthy body according to the invention, such as a rope according to the invention. In an aspect the crane according to the invention comprises a sheave and the belt according to the invention. In an aspect the crane according to the invention comprises a sheave and the chain according to the invention. The crane according to the invention comprises a winch and the lengthy body according to the invention, such as the rope according to the invention.

A fairlead is a device to guide a line, rope or cable around an object, out of the way or to stop it from moving laterally. Typically a fairlead will be a ring or hook. The fairlead may be a separate piece of hardware, or it could be a hole in the structure. An additional use on boats is to keep a loose end of line from sliding around the deck. While fairleads are most frequently found in nautical applications, they may be found anywhere rigging is used. In off-roading, a fairlead is used to guide the winch cable and remove lateral strain from the winch.

The present disclosure also relates to a marine vessel, a sailing vessel, a boat, a ship or a marine platform comprising a fairlead and a rope according to the invention. The present disclosure also relates to a vehicle, such as a car, a truck, an aircraft, a train or a tram comprising a fairlead and the rope according to the invention. A boat is a watercraft of a large range of types and sizes, but generally smaller than a ship, which is distinguished by its larger size, shape, cargo or passenger capacity, or its ability to carry boats. A ship is a large watercraft that travels the world's oceans and other sufficiently deep waterways, carrying goods or passengers, or in support of specialized missions, such as defense, research and fishing. A marine platform herein includes without limitation an oil platform, offshore platform, and an offshore drilling rig.

The present invention further provides a method of manufacturing an article comprising the step of creating/-producing the article from the lengthy body and/or the composite elongated body, preferably the article is a net, a synthetic chain, a personnel protection item or a glove.

The present disclosure further relates to the use of the coating composition as defined herein for improving bending performance of a lengthy body according to the invention.

The present disclosure further relates to the use of the coating composition as defined herein for improving abrasion performance, in particular an improved external abrasion fatigue of a lengthy body according to the invention.

The present disclosure further relates to the use of the coating composition as defined herein for improving bending performance of a rope.

The present disclosure further relates to the use of the coating composition as defined herein for improving abrasion performance, in particular an improved external abrasion fatigue of a rope.

In particular, the present invention provides a use of the polymeric composition as defined herein to reduce abrasion of a rope, a synthetic chain or a belt comprising such composition, wherein the rope, synthetic chain or belt comprises high performance polyethylene (HPPE) filaments having a tenacity of at least 0.6 N/tex. Abrasion may be measured as described herein. A typical method is the Fairlead abrasion performance test. For example the 10 mm rope fairlead abrasion performance test.

The present disclosure provides a use of the coating composition as defined herein to improve bending performance of a rope, a synthetic chain or a belt comprising such composition.

The present invention further relates to a method of lifting and / or placement of an object comprising the steps:

a) providing a rope, a chain or a belt according to the invention;
b) connecting the rope, the chain or the belt to the object to be lifted; and
c) using the rope, the chain or the belt to lift and/or place the object.

The method of lifting and / or placement according to the invention includes heavy lifting and mooring of objects onto a seabed. The method of lifting and / or placement according to the invention includes lifting and placement of objects, onto a ship, onto land or on land. Other applications include offshore oil and gas exploration, oceanographic, seismic and other industrial applications.

In one embodiment, the method of lifting and / or placement of an object comprises the steps

a) providing a rope as defined herein;
b) connecting the rope to the object to be lifted; and
c) using the rope to lift and/or place the object.

The invention will be further explained by the following embodiments and examples and comparative experiments.

Below also the methods used in determining the various parameters useful in defining the present invention are hereinafter presented.

The present invention includes without limitation the following embodiments.

FIGURE DESCRIPTION

Figure 1a schematically depicts a cross section of a yarn (1) comprising high performance polyethylene HPPE filaments (2) having a tenacity of at least 0.6 N/tex.

Figure 1b schematically depicts a yarn (1) comprising high performance polyethylene HPPE filaments (2) having a tenacity of at least 0.6 N/tex having a length dimension (Ld) which is much greater than a transverse dimension (Td) of width and of thickness.

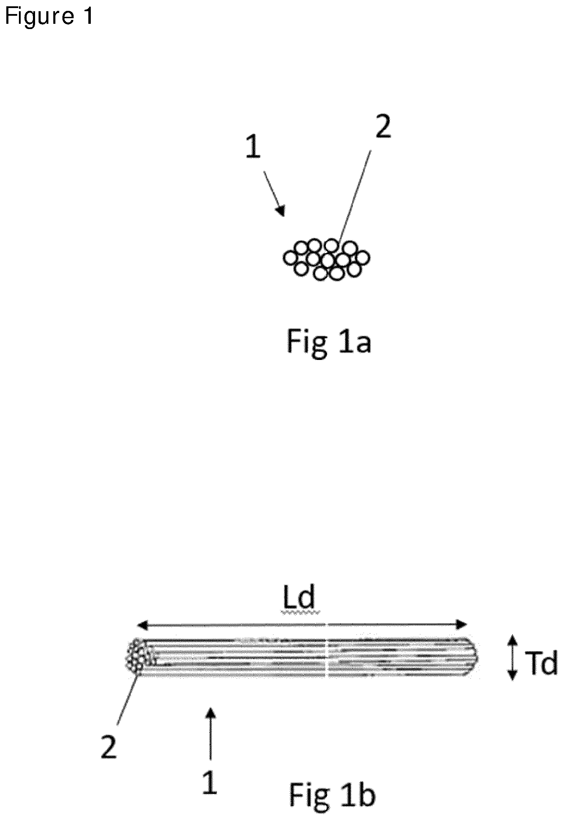

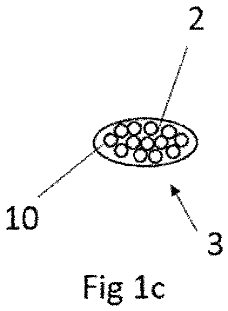

Figure 1c schematically depicts a cross section of a composite elongated body according to the invention comprising high performance polyethylene HPPE filaments (2) having a tenacity of at least 0.6 N/tex and a polymeric composition throughout (10) the composite elongated body. The composite elongated body comprises said polymeric composition, more specifically the polymeric composition is present in between the filaments of the composite elongated body. The polymeric composition is present throughout the cross-section of the composite elongated body and in intimate contact with the at least one filament, i.e. with the individual filaments. In an even more preferred embodiment the polymeric composition impregnates the filaments; in other words: the polymeric composition is present throughout the cross-section of the composite elongated body. Hereby is understood that the polymeric composition is present in between substantially all the filaments of the composite elongated body. Preferably at least 50% of the surface of the filaments of the composite elongated body in contact with the polymeric composition, more preferably at least 70% and most preferably 90% of the filament surface is in contact with the polymeric composition. A way to look at this may be via a microscopic image of a cross section of the composite elongated body and see which % of the filament surface is in contact with the polymeric composition.

Figure 2 schematically depicts a Cyclic bend-over-sheave (CBOS) test set-up for a 5 mm rope. Details are given below in the METHODS. Fig 2B depicts a schematic "see through" of the inside of the schematic frame (24) in Fig. 2A. F represents the direction of the Tension (MPa).

Figure 3 schematically depicts a Cyclic bend-over-sheave (CBOS) test set-up for a 21 mm rope. Details are given below in the METHODS.

Figure 4 schematically depicts a fairlead abrasion test set-up. Details are given below in the METHODS.

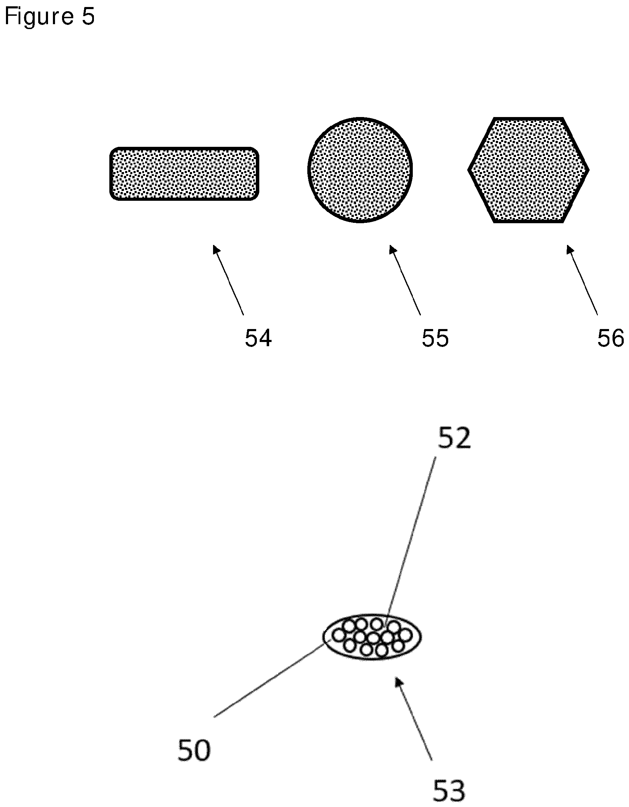

Figure 5 schematically depicts a cross section of a composite elongated body (53) according to the invention comprising high performance polyethylene HPPE filaments (52) having a tenacity of at least 0.6 N/tex and a polymeric composition throughout (50) the composite elongated body. In an embodiment the composite elongated body may have cross section having a rectangular shape (54), an oval shape (52), a circular shape (55), a hexagonal (56) or an octagonal shape.

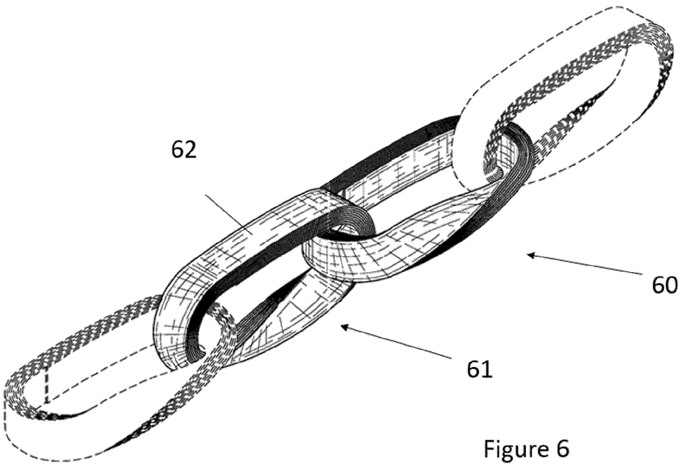

Figure 6 schematically depicts an embodiments of a chain according to the invention. The chain (60) comprises at least two interconnected chain links (61). The chain link comprises a strip (62). The strip is typically a narrow webbing comprising at least at least two composite elongated bodies (not shown in detail). The strip of material in this embodiment forms a plurality of convolutions of said strip, the strip having a longitudinal axis and each convolution of said strip comprising a twist along the longitudinal axis of said strip, said twist being an odd multiple of 180 degrees. Such a chain link is described in the published patent application WO2013186206. By a "convolution" of the strip is herein understood a loop thereof, also called a winding or a coiling, i.e. a length of said strip starting at an arbitrary plane perpendicular to the longitudinal axis of the strip and ending in an endless fashion at the same plane, thereby defining a loop of said strip. The term "plurality of convolutions" may also be understood herein as "coiled into a plurality of overlapping layers". Said overlapping layers of the strip are preferably substantially superimposed upon one another but may also present a lateral offset. The convolutions may be in direct contact to each other but may also be separated. Separation between the convolutions may for example be by a further strip of material, an adhesive layer or a coating. Preferably, the chain link in the chain according to the present invention comprises at least 2 convolutions of the strip of material, preferably at least 3, more preferably at least 4, most preferably at least 8 convolutions. The maximum number of convolutions is not specifically limited. For practical reasons 1000 convolutions may be considered as an upper limit. Each convolution of the strip of material may comprise a twist of an odd multiple of 180 degrees along its longitudinal axis; preferably the odd multiple is one. Said twist of an odd multiple of 180 degrees will result in a chain link comprising a twist of an odd multiple of 180 degrees along its longitudinal axis. The presence of said twist in each convolution of the strip of material results in a chain link with a single outer surface. Another characteristic of said construction may be that the lateral surfaces of a first end of the strip of material are superimposed on either side by the convoluted strip of material. It was observed that said twist results in a construction such that the convolutions lock themselves against relative shifting. Preferably, at least 2 convolutions of the strip of material are connected to each other by at least one fastening means.

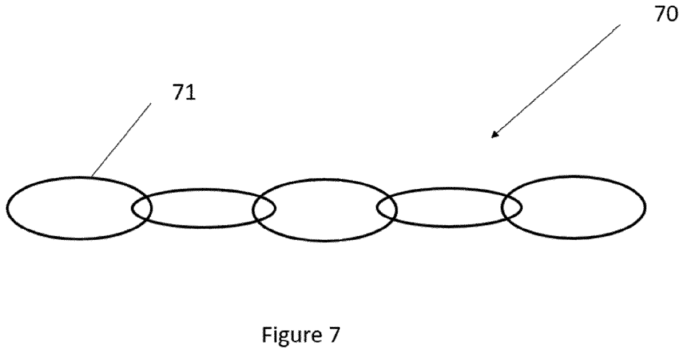

Figure 7 schematically depicts an embodiment of a chain according to the invention. The chain (70) comprises at least two interconnected chain links (71). The chain links comprise at least at least two composite elongated bodies (not shown in detail).

Figure 8a represents an example of a knotless warp-knitted net (Raschel Knotless net) (80), comprising cords (81), each cord comprises a single composite elongated body (81), the cords form mesh legs (indicated with ovals 85) and joints. The joints are formed from intermingled cords (indicated within ovals 82 and 83: two mesh legs are formed into a joint). The mesh size (length) is indicated by arrow (84). In another embodiment the cord comprises at least two composite elongated bodies, typically 2 to 3 composite elongated bodies.

Figure 8b shows schematically that mesh size (84) of a knotless net is measured as the length between the 2 opposite joints of a stretched mesh.

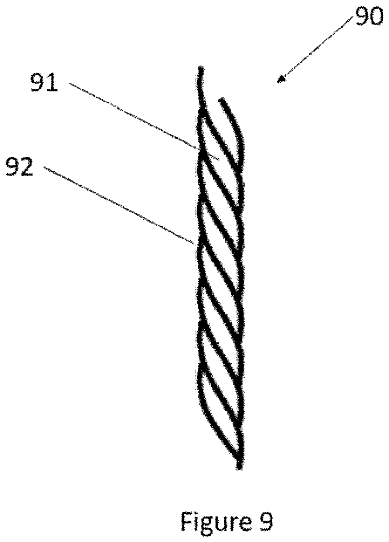

Figure 9 schematically depicts a rope (90) according to the invention comprising laid strands (91), the strands comprise at least three composite elongated bodies (not shown in detail) according to the invention. The outer surface of the rope is indicated with 92.

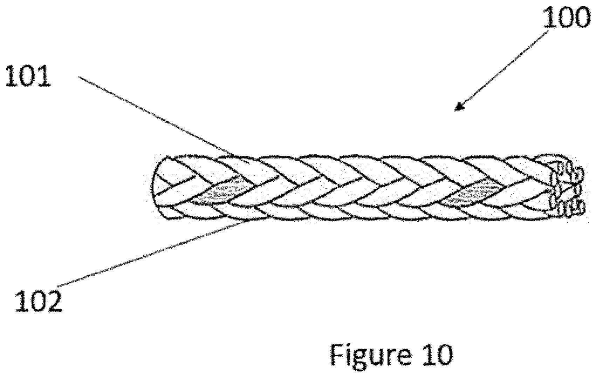

Figure 10 schematically depicts a rope (100) according to the invention comprising twelve braided strands (101), the strands comprise the composite elongated body (not shown in detail) according to the invention. The outer surface of the rope is indicated with 102.

Figure 11 shows a SEM picture of a surface of a composite elongated body.

Figure 12 is described in the METHODS under Tensile properties of HPPE filaments.

Figure 13 is described in the METHODS under Coefficient of Friction.

## METHODS

- Titer was measured by weighing an arbitrary length of yarn or filament, respectively. The titer of the yarn or filament was calculated by dividing the weight by the length and is reported in either tex or dtex expressing the weight in gram per 100,000 m or 10,000 m respectively. The length of yarn or filament measured is typically 50 meters.

- Heat of fusion and peak melting temperature have been measured according to standard DSC methods ASTM E 793-85 and ASTM E 794-06, respectively, at a heating rate of 10 K/min for the second heating curve and performed under nitrogen on a dehydrated sample. In such DSC measurement a part of the full composite elongated composition (including HPPE filaments) can be measured. The peaks from HPPE and coating are sufficiently well separated so the Tm and heat of fusion of coating can be determined directly.

- Coating percentage The amount of polymeric composition in the composite elongated body according to the invention (coating percentage) may be determined as follows.

  A sample of 1.0 gram of composite elongated body is taken. The polymeric composition in the sample is extracted from the composite elongated body via a warm Soxhlet extraction: refluxing with toluene containing 5% acetic acid (150 ml), for 16 hours. After extraction the remainder of the sample is dried for 2.5 hours at 80°C in vacuum. By weighing the sample before and after the extraction process, the coating percentage can be calculated using the following formula:

$$\text{Coating percentage} = (1-(M\_after\_extraction/M\_before\_extraction))*100\%$$

  In which M_after_extraction is the mass of the sample after extraction and drying as described above and M_before_extraction is the mass of the sample before extraction and drying as described above.

- Density The density of the polymeric composition is measured according to ISO 1183-04. The density of the thermoplastic ethylene copolymer is measured according to ISO 1183-04.

  Immersion method (A) and more preferably density gradient column method (B) are suitable for the present products. It is noted that ISO 1183-1:2004 covers three methods, and that the skilled person will be able to select, depending on the sample to be tested, suitable sample preparation technique and method.
  The skilled person would know that if he/ she is faced with a finished product, he/she needs to obtain the polymeric composition before doing the density measurement. It is part of the skills of the skilled person to, depending on what the finished product looks like, determine how to obtain and prepare a sample of the polymeric composition and thereafter based on what the sample looks like select the appropriate way to measure the density. For example the polymeric composition may be scraped off from the composite elongated body and measured. Depending on what the scraped off product looks like, any of the corresponding methods listed in the ISO 1183-2004 may be used.
  It is noted that the density of the thermoplastic ethylene copolymer will typically be provided by the supplier will provide this information e.g. in the specification of the product.

- IV: the Intrinsic Viscosity is determined according to method ASTM D1601(2004) at 135°C in decalin, the dissolution time being 16 hours, with BHT (Butylated Hydroxy Toluene) as anti-oxidant in an amount of 2 g/l solution, by extrapolating the viscosity as measured at different concentrations to zero concentration.

- <u>Tensile properties of HPPE filaments:</u> filament tenacity and filament tensile modulus:

  Determination of filament linear density and mechanical properties is carried out on a semiautomatic, microprocessor controlled tensile tester (Favimat, tester no. 37074, from Textechno Herbert Stein GmbH & Co. KG, Mönchengladbach, Germany) which works according to the principle of constant rate of extension (DIN 51 221, DIN 53 816, ISO 5079) with integrated measuring head for linear density measurement according to the vibroscopic testing principle using constant tensile force and gauge length and variable exciting frequency (ASTM D 1577). The Favimat tester is equipped with a 1200 cN balance, no. 14408989. The version number of the Favimat software: 3.2.0.

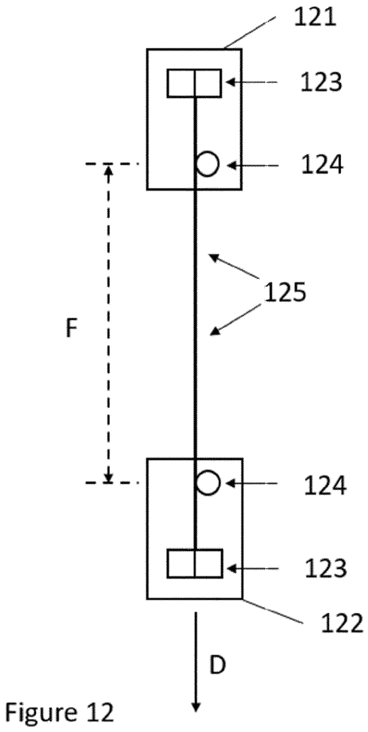

  Clamp slippage during filament tensile testing, preventing filament fracture, is eliminated by adaption of the Favimat clamps of the Favimat according to figure 12.

  The upper clamp 121 is attached to the load cell (not shown). The lower clamp 122 moves in downward direction (D) with selected tensile testing speed during the tensile test. The filament (125) to be tested, at each of the two clamps, is clamped between two jaw faces 123 (4x4x2 mm) made from Plexiglass® and wrapped three times over ceramic pins 124. Prior to tensile testing, the linear density of the filament length between the ceramic pins is determined vibroscopically. Determination of filament linear density is carried out at a filament gauge length (F) of 50 mm (see figure 12), at a pretension of 2.50 cN/tex (using the expected filament linear density calculated from yarn linear density and number of filaments). Subsequently, the tensile test is performed at a test speed of the lower clamp of 25 mm/min with a pretension of 0.50 cN/tex, and the filament tenacity is calculated from the measured force at break and the vibroscopically determined filament linear density. The elongational strain is determined by using the whole filament length between the upper and lower plexiglass jaw faces at the defined pretension of 0.50 cN/tex. The beginning of the stress-strain curve shows generally some slackness and therefore the modulus is calculated as a chord modulus between two stress levels. The Chord Modulus between e.g. 10 and 15 cN/dtex is given by equation (1):

$$\text{Chord Modulus between 10 and 15 cN/dtex} \ = \ CM(10:15) = \frac{50}{\varepsilon_{15} - \varepsilon_{10}} \ (\text{N/tex}) \qquad (1)$$

where :

$\varepsilon_{10}$ = elongational strain at a stress of 10 cN/dtex (%); and
$\varepsilon_{15}$ = elongational strain at a stress of 15 cN/dtex (%).

The measured elongation at break is corrected for slackness as given by equation (2):

$$EAB = EAB\,(\text{measured}) - (\varepsilon_5 - \frac{50}{CM(5:10)}) \qquad (2)$$

where :

EAB = the corrected elongation at break (%)
EAB (measured) = the measured elongation at break (%)
$\varepsilon_5$ = elongational strain at a stress of 5 cN/dtex (%)
CM(5:10) = Chord Modulus between 5 and 10 cN/dtex (N/tex).

- Tensile properties of HPPE yarns: tensile strength (or tenacity) and tensile modulus (or modulus) of a yarn are defined and determined on multifilament yarns as specified in ASTM D885M (1995), using a nominal gauge length of the yarn of 500 mm, a crosshead speed of 50 %/min and Instron 2714 clamps, of type "Fibre Grip D5618C". On the basis of the measured stress-strain curve the modulus is determined as the gradient between 0.3 and 1 % strain using a pretension of 0.2 cN/tex. For calculation of the modulus and strength, the tensile forces measured are divided by the titre, as determined above; values in GPa are calculated assuming a density of 0.97 $g/cm^3$ for the HPPE.

- <u>Tensile strength and tensile modulus</u> at break of the thermoplastic ethylene copolymer may be measured according ISO 527-2.

- <u>Short chain branches per 1000 total carbon (SCB/1000TC):</u>
  is determined by NMR techniques and IR methods calibrated thereon. As an example the amount of methyl, ethyl or butyl short side chains are identical to the amounts of methyl side groups per thousand carbon atoms contained by the UHMWPE as determined by proton 1H liquid-NMR, hereafter for simplicity NMR, as follows:

- 3 - 5 mg of UHMWPE are added to a 800 mg 1,1',2,2'-tetracholoroethane-d$_2$ (TCE) solution containing 0.04 mg 2,6-di-tert-butyl-paracresol (DBPC) per gram TCE. The purity of TCE is > 99.5 % and of DBPC > 99 %.
- The UHMWPE solution is placed in a standard 5 mm NMR tube which is then heated in an oven at a temperature between 140° - 150°C while agitating until the UHMWPE is dissolved.
- The NMR spectrum is recorded at 130°C e.g. with a high field 400 MHz NMR spectrometer using an 5 mm inverse probehead and set up as follows: a sample spinrate of between 10 - 15 Hz, the observed nucleus -1H, the lock nucleus - 2H, a pulse angle of 90°, a relaxation delay of 30 sec, the number of scans is set to 1000, a sweep width of 20 ppm, a digital resolution for the NMR spectrum of lower than 0.5, a total number of points in the acquired spectrum of 64k and a line broadening of 0.3 Hz.
- The recorded signal intensity (arbitrary units) vs. the chemical shift (ppm), hereafter spectrum 1, is calibrated by setting the peak corresponding to TCE at 5.91 ppm.
- After calibration, the two peaks (doublet) of about equal intensity are used to determine the amount of methyl side groups are the highest in the ppm range between 0.8 and 0.9 ppm. The first peak should be positioned at about 0.85 ppm and the second at about 0.86 ppm.
- The deconvolution of the peaks is performed using a standard ACD software produced by ACD/Labs;
- The accurate determination of the areas A1 $_{methyl\ side\ groups}$, hereafter A1 of the deconvoluted peaks used to determine the amount of methyl side groups, i.e. A1 = A1 $_{first\ peak}$ + A1 $_{second\ peak}$ is computed with the same software.
- The amounts of methyl side groups per thousand carbon atoms, is computed as follows:

$$\text{methyl side groups} = 2 \times \frac{1000 \times \frac{A1}{3}}{A1 + A2 + A3};$$

- wherein A2 is the area of the three peaks of the methyl end groups which are the second highest in the ppm range between 0.8 and 0.9 and are located after the second peak of the methyl side groups towards increasing the ppm range and wherein A3 is the area of the peak given by the CH2 groups of the main UHMWPE chain, being the highest peak in the entire spectrum and located in the ppm range of between 1.2 and 1.4.

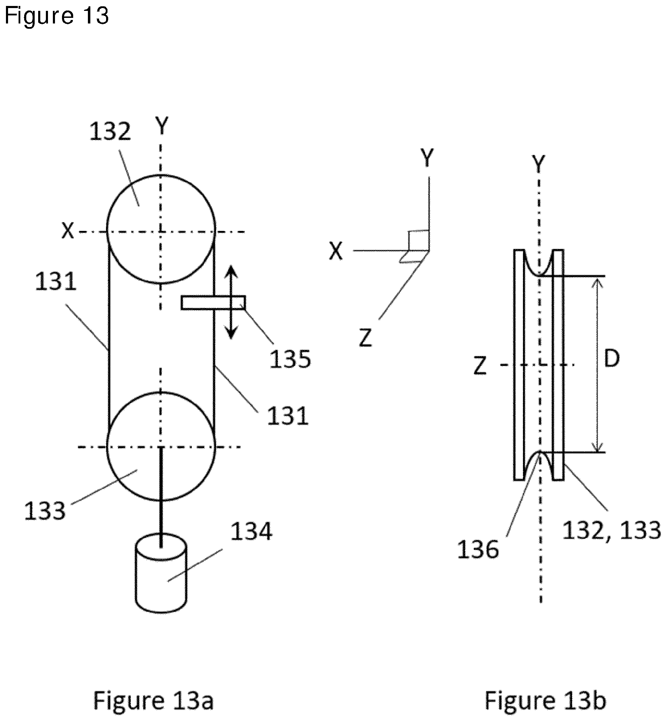

- Minimum creep rate of yarns may be determined as described in the published patent application WO2016001158. In particular as described in the section "Stabilizing creep and minimum creep rate in the fibers" of WO2016001158. The minimum creep rate of the yarns has been derived therein from a creep measurement applied on multifilament yarns by applying ASTM D885M (1995) standard method under a constant load of 900 MPa, at a temperature of 30°C and then measuring the creep response (i.e. strain elongation, %) as a function of time. The minimum creep rate is determined by the first derivative of creep as function of time, at which this first derivative has the lowest value (e.g. the creep rate [1/s] of the yarn is plotted as function of strain elongation [%] of the yarn in a so-called known Sherby and Down diagram.)
- Coefficient of friction The set-up of the equipment to measure the coefficient of friction is schematically depicted in Figure 13a. Figure 13b depicts a cross section of one of the sheaves from Figure 13a, the cross section is given along the X-Y area in Figure 13a. The coefficient of friction of a 5 mm diameter rope (131) with respect to metal was measured by running the rope in a machine over two sheaves (132, 133) made from tool steel 1.2709 (roughness Ra 0.215 ±0.002 (n=3)), one of which was blocked (132) to prevent rotation (see Figure 13). Water of 23°C ran through the blocked sheave (132), the Relative Humidity in the room was 50%. Sheave diameter (D) of each of the sheaves (132, 133) was 99 mm. The radius of the groove (136) of each of the sheaves was 3 mm. A force was applied between the two sheaves using two pneumatic cylinders (134, only one is shown) both connected to opposite sides of the freely rotating sheave (133) such that the rope was loaded with a load of 3750 N. The rope was then moved over the sheaves at a speed of 2750 mm/min by means of a slider (135) to which the rope is connected, and which slider is moved along the Y-axis. The force required to move the rope was measured, and using Eq 1 the coefficient of friction was calculated

$$\mu = \frac{1}{\pi} \ln(\frac{F_{braid} + F_{measured}}{F_{braid}})$$

Where $\mu$ is the coefficient of friction, $F_{braid}$ is the force in the braid (3750 N), and $F_{measured}$ is the measured force required to move the rope over the stationary and moving sheave at the defined speed.
Before measuring the coefficient of friction, the rope was loaded to 7750N for 60 seconds by means of increasing the pressure in the pneumatic cylinders and subsequently unloaded by means of increasing and decreasing pressure in the pneumatic cylinders to remove constructional elongation. Subsequently, the measurement of the coefficient of friction was performed by moving the slider (135) 350 mm down and thereafter 350 mm up. This is one cycle. For each rope 3 cycles were measured. The average force during the second cycle was used to calculate the coefficient of friction.

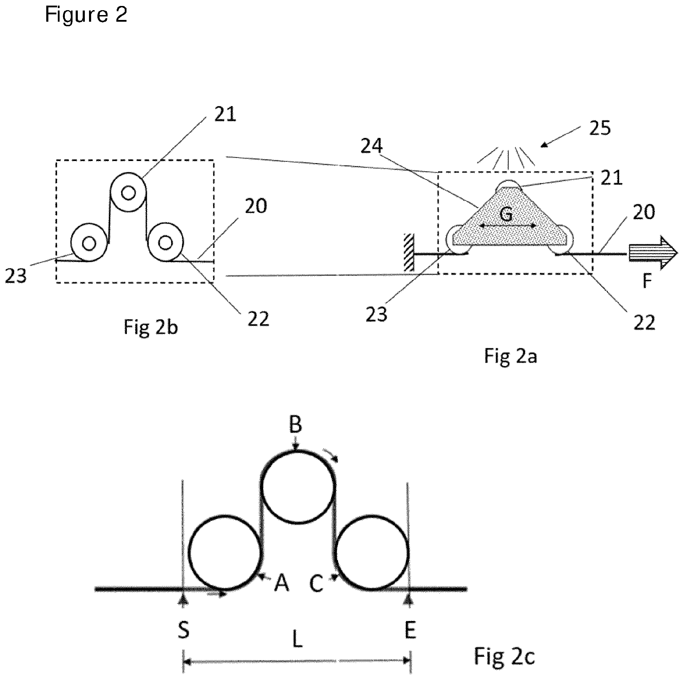

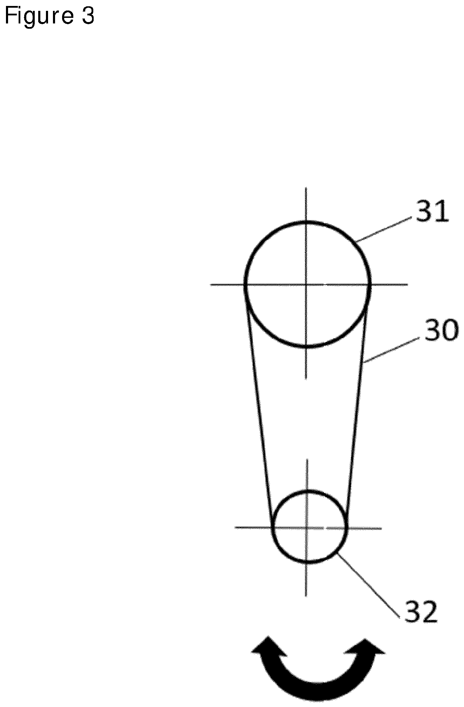

- CBOS 5 mm test (test set-up is schematically depicted in Figure 2): 6 bends per machine cycle, rope diameter 5 mm, D/d 10, Tension 510 MPa (Load: 30% Minimum Breaking Load), in wet environment (water cooling: ambient temperature water sprayed (Fig. 2a - item 25) at bending zone area of the top sheave (21). The cyclic bending over sheave (CBOS) performance was tested. Within this test the rope (20) is bend over three rolling sheaves (21, 22, 23) each having a diameter of 50 mm. The three sheaves were positioned in an upside-down V-formation on a frame (24). The rope was placed over the sheaves in such way that the rope has a bending zone at each of the sheaves. The rope was placed under a specific load (30% MBL). The frame with the sheaves is cycled back and forth (indicated with an ← → arrow (G)) during which the rope is exposed to cyclic bending over sheaves until the rope reaches failure (= break). One machine cycle represents the frame with the sheaves going back and forth once. This means that one machine cycle represents 6 bends (3 bends a time). The stroke length (L, see Fig 2c, is the distance from start(S) to end (E)) of the rope was 45 cm long. The cycling period was 5 seconds per machine cycle.
  One machine cycle contains a straight bend (90°) at A, reverse bend (180°) at B, followed by straight bend (90°) at C. Rope is alternately bend in opposite directions, one full cycle exists of 4 (90°) straight bends and 2 (180°) reverse bends. One full cycle is 2 stroke lengths long.
- Cyclic bend-over-sheave (CBOS) 21 mm-A test (test set-up is schematically depicted in Figure 3): rope diameter 21 mm, D/d 20. CBOS test: the bend fatigue of the rope was tested by bending the rope over a sheave. This is schematically depicted in Figure 3. The test rope (30) was configured in an endless loop construction, meaning both rope ends have been connected with use of a splice termination. The loop had a circumference of about 6.5 m. The splice termination (often referred also to as a tucked splice) had an amount of tucks of 9 per rope side. Both splice-ends were not tapered. This loop was positioned over the large sheave on top (traction sheave (31)) and small bending sheave (32) in the bottom of the machine.
  The rope was placed under load (Tension 280 MPa (this is 18% of the MBL)) and cycled back and forward over the sheave, at a stroke speed of 210 m/min, until the rope reached failure. Each machine cycle produced two straight-bent-straight bending cycles of the exposed rope section, the double bend zone. The double bend zone was approximately 14 times the diameter of the rope. The bending cycle time was 12 seconds per machine cycle (1 cycle is back and forth), in dry environment (no water cooling). The pause was 1 second between each cycle reversal. The pre-load for bedding in the rope was 5 times 14.5 metric tons.
- Cyclic bend-over-sheave (CBOS) 21 mm-B test: the same as for CBOS 21mm-A above but with Tension 370 MPa.
- Fairlead 10 mm test: rope diameter 10 mm, 2 abrasion cycles per machine cycle, 36 seconds per machine cycle - C2 fairlead (DIN 81915) D/d 20, Tension 380 MPa (Load: 25% MBL), in dry environment (no water cooling).

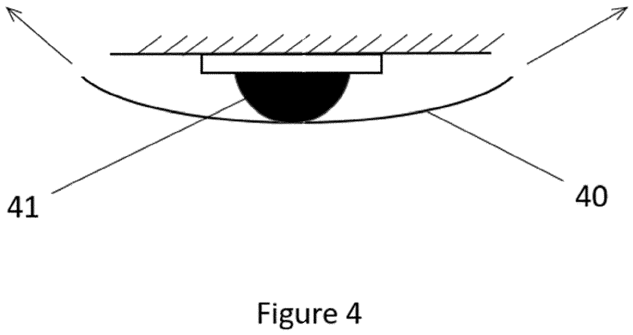

The fairlead abrasion performance was tested. This is schematically depicted in Figure 4. Within this test the rope (40) is moved under a specific load (1800 kg) over a fairlead (41). One machine cycle represents the rope being pulled over the surface back and forth once. The rope was cycled back and forth until failure. The cycling period was 36 seconds per machine cycle. The stroke length of the rope was 56 cm long.

EXPERIMENTS

The following examples are given by way of non-limiting reference only.

MATERIALS

Paramelt™ Aquaseal X2050 (also referred to as X2050 herein) is a water based dispersion, formulated with unplasticized high molecular weight thermoplastic ethylene copolymers, which is totally solvent free. Solids content 44%, pH 11, a milky white liquid, with a Viscosity (Dynamic @ 20C) of 150 mPas.

This thermoplastic ethylene copolymer has a melting peak at 76.7 °C and heat of fusion of 21.9 J/g. It was purchased from Paramelt Veendam B.V., Veendam The Netherlands.

Michelman® Michemprime MP2960 is a water-based copolymer dispersion having pH of 11-12 and a non-volatile content of 16.5-17.5%. It was purchased from Michelman SARL, Windhof, Luxembourg.

BYK® Aquacer® 2650 is a non-ionic emulsion of carnauba wax in water. It comprises 30% non-volatile matter and has a pH of 4.5. It was purchased from BYK Netherlands B.V.

BYK® Aquacer® 2700 is an emulsion comprising a Fischer-Tropsch wax at a pH of 9.5. It was purchased from BYK Netherlands B.V.

NeoCryl A-668 is an anionic acrylic styrene copolymer emulsion, supplied as 45 % solids in water. It was purchased from BYK Netherlands B.V.

DSM NeoRez® R-2180 is an aliphatic, self-crosslinking polyurethane dispersion in water, having a pH of 7.3 and a solids content of 35%. It was acquired from DSM Coating Resins B.V. Waalwijk, Netherlands.

Manufacturing of the coating compositions for Ex. 1-6

The thermoplastic ethylene copolymer and the lubricant were mixed by adding the lubricant to the ethylene copolymer at room temperature and stirring for 15 min.

Manufacturing of the comparative coating compositions for Comp. Ex. 1 and Comp. Ex. 2

The comparative coating composition was prepared by diluting the ethylene copolymer by water in the amount of 1:1.

Manufacturing of a composite elongated body

A HPPE yarn (Dyneema® 1760 SK78, yarn tenacity 34.5 cN/dtex, filament tenacity 37 cN/dtex, Modulus 1190 cN/dtex, from DSM Protective materials BV, The Netherlands) was impregnated by dipping in the coating composition. The wetted yarns were fed first through a die and then in seven passes through a hot air oven with a length of 6 meters with an inlet speed of 50 m/min and an outlet speed of 50 m/min. The oven temperature was set at 110 °C. The obtained dried monofilament-like product each contained about 15 mass% polymeric composition and 85 mass% was fibrous material (filaments).

Manufacturing of a 5 mm rope

The composite elongated body was used to produce 5 mm ropes (rope having 5 mm diameter), each having 48 single yarns divided over 12 strands. The rope contained 12 strands, (round)braided in 6 clockwise oriented strands and 6 counter-clockwise oriented strands, each strand contained a 20 turns per meter twisted assembly of 4 monofilament-like products, braiding pitch was 7 times the diameter of the rope.

Manufacturing of a 10 mm rope

The composite elongated body was used to produce 10 mm ropes (10 mm diameter). Each rope contained 12 strands, (round)braided in 6 clockwise oriented strands and 6 counter-clockwise oriented strands, each strand contained 18 turns per meter twisted assembly of 20 monofilament-like products, braiding pitch was 7 times the diameter of the rope. This way Rope Examples 1 to 6 and Comparative Examples 1 and 2 were made.

Fairlead test

The ropes from Rope Examples 1 to 6 and Comparative Examples 1 and 2 were subjected to the Fairlead 10 mm test as described above.

Table 1 reports the Fairlead test results.

Table 1

| Example No. | Polyethylene copolymer base matrix | Lubricant | Solids matrix:solids lubricant | Coefficient of friction | Fairlead abrasion cycles |
|---|---|---|---|---|---|
| Comp. Ex. 1 | X2050 | None | N/A | 0.13 | 11.5 |
| Ex. 1. | X2050 | Aquacer 2650 | 1:1 | 0.10 | 25 |
| Ex. 2. | X2050 | NeoRez R-2180 | 3:7 | 0.13 | 26 |
| Ex. 3. | X2050 | NeoCryl A-668 | 1:3 | 0.11 | 28 |
| Ex. 4. | X2050 | NeoCryl A-668 | 1:1 | 0.12 | 18 |
| Comp. Ex. 2. | MP2960 | None | N/A | 0.13 | 23.5 |
| Ex. 5. | MP2960 | Aquacer 2700 | 1:1 | 0.12 | 48.3 |

(continued)

| Example No. | Polyethylene copolymer base matrix | Lubricant | Solids matrix:solids lubricant | Coefficient of friction | Fairlead abrasion cycles |
|---|---|---|---|---|---|
| Ex. 6. | MP2960 | Aquacer 2650 | 1:1 | 0.07 | 29 |

The results indicate that presence of a lubricant together with a polyethylene copolymer base matrix leads to a reduction in the coefficient of friction. Further, the presence of a lubricant together with a polyethylene copolymer base matrix improves the abrasion resistance of a coated elongated body. Further, coating with MP2960 improves abrasion resistance more than coating with X2050. When the coating comprises a higher proportion of solids in the lubricant than solids in the matrix, the rope has a further improved abrasion resistance.

**Claims**

1. A composite elongated body (3, 53), comprising high performance polyethylene HPPE filaments (2, 52, 125) having a tenacity of at least 0.6 N/tex and a polymeric composition (10, 50) throughout the composite elongated body, wherein the polymeric composition comprises a thermoplastic ethylene copolymer,
wherein the thermoplastic ethylene copolymer is a copolymer of ethylene and wherein said polymeric composition has a peak melting temperature in the range from 40 to 140°C, measured in accordance with ASTM E794-06, **characterized in that** the polymeric composition further comprises a lubricant.

2. The composite elongated body according to claim 1, wherein the high performance polyethylene HPPE filaments are provided as a yarn (1), said yarn comprising at least two HPPE filaments having a tenacity of at least 0.6 N/tex.

3. The composite elongated body according to claim 1 or 2, wherein the polyethylene of the high performance polyethylene (HPPE) filaments is of high molecular weight and has an Intrinsic Viscosity (IV) of at least 4 dl/g.

4. The composite elongated body according to any one of claims 1 to 3, wherein the HPPE filaments comprise high molecular weight polyethylene (HMWPE) or ultra-high molecular weight polyethylene (UHMWPE) or a combination thereof.

5. The composite elongated body according to claim 4, wherein the HPPE filaments consist of HMWPE and/or UHMWPE.

6. The composite elongated body according to any one of claims 1 to 5, wherein the lubricant is a wax.

7. The composite elongated body according to claim 6, wherein the wax is synthetic wax or a plant wax.

8. The composite elongated body according to claim 6, wherein the wax is a polyethylene wax, a polypropylene wax, beeswax, carnauba wax or a Fischer-Tropsch wax.

9. The composite elongated body according to any one of claims 1 to 5, wherein the lubricant is a polymeric dispersion.

10. The composite elongated body according to claim 9, wherein the polymeric dispersion is a dispersion of a polyurethane or an acrylic, or a hybrid of a polyurethane and an acrylic.

11. The composite elongated body according to any one of claims 1 to 5, wherein the lubricant comprises: a synthetic grease or oil; a mineral grease or oil; an inorganic solid such as graphite or molybdenum disulfide; a ceramic such as a ceramic lubricant or ceramic coating; or any combination thereof.

12. A lengthy body comprising at least two composite elongated bodies as defined in any of the preceding claims.

13. The lengthy body according to claim 12, wherein the lengthy body comprises from 2 to 100.000 composite elongated bodies as defined in any one of claims 1 to 11.

14. The lengthy body according to claim 12 or 13, wherein the lengthy body is a strand (91, 101), a cable, a cord (81), a rope (90, 100, 131), a belt, a strip (62), a hose or a tube.

15. The lengthy body according to claim 14, wherein the lengthy body is a rope comprising from 3 to 100.000 composite elongated bodies as defined in any one of claims 1 to 11.

16. An article comprising at least one composite elongated body (3, 53) as defined in any one of claims 1 to 11 and/or comprising at least one lengthy body as defined in any one of the claims 12 to 15, wherein the article is a synthetic chain (60, 70), a sling, a tendon, a net (80), a personal protection item or a glove.

17. The article according to claim 16, wherein the article is a sling or a tendon comprising from 2 to 100.000 composite elongated bodies as defined in any one of claims 1 to 11.

18. A rope (90, 100, 131), a belt or a net (80) comprising at least three elongated bodies (3, 53) according to any one of claims 1 to 11.

19. A crane comprising a sheave (132, 133) and the rope (90, 100, 131) according to claim 15 or 18.

20. A method of manufacturing a composite elongated body (3, 53) comprising the steps:

   a) providing a coating composition, wherein the composition comprises

   - a thermoplastic ethylene copolymer and
   - a lubricant;

   b) providing a yarn (1) comprising at least two HPPE filaments, the filaments having a tenacity of at least 0.6 N/tex;
   c) applying the coating composition to the yarn to obtain a coated yarn; and
   d) elevating the temperature of the coated yarn to obtain the composite elongated body,

   wherein the high molecular weight thermoplastic ethylene copolymer is a copolymer of ethylene and wherein said thermoplastic ethylene copolymer has a peak melting temperature in the range from 40 to 140°C.

21. The method according to claim 20 wherein in step d) elevating the temperature causes the coating composition to dry and the thermoplastic ethylene copolymer to melt.

22. A method of manufacturing a lengthy body comprising the step of assembling at least two composite elongated bodies as defined in any one of claims 1 to 11 to form the lengthy body, preferably the lengthy body is a rope (90, 100, 131), such as a laid (90) or braided rope (100).

23. A method of manufacturing an article comprising the step of providing the lengthy body according to any one of claims 12 to 15 and/or the composite elongated body according to any one of claims 1 to 11 and producing the article, wherein preferably the article is a net (80), a synthetic chain (60, 70), a personnel protection item or a glove.

24. A method of lifting and / or placement of an object comprising the steps

   a) providing a rope (90, 100) as defined in claim 15 or 18;
   b) connecting the rope to the object to be lifted; and
   c) using the rope to lift and/or place the object.

25. Use of a polymeric composition (10, 50) comprising a thermoplastic ethylene copolymer and a lubricant to reduce abrasion of a rope (90, 100, 131), a synthetic chain (60, 70) or a belt comprising such composition, wherein the rope, synthetic chain or belt comprises high performance polyethylene HPPE filaments having a tenacity of at least 0.6 N/tex, and wherein the thermoplastic ethylene copolymer is a copolymer of ethylene and wherein said polymeric composition has a peak melting temperature in the range from 40 to 140°C, measured in accordance with ASTM E794-06.

26. The use according to claim 25, wherein the lubricant is a wax, preferably the wax is a polyethylene wax, a polypropylene wax, beeswax, carnauba wax or a Fischer-Tropsch wax.

**Patentansprüche**

1. Langgestreckter Verbundkörper (3, 53), umfassend Hochleistungs-Polyethylen-HPPE-Filamente (2, 52, 125) mit einer Festigkeit von mindestens 0,6 N/tex und einer Polymerzusammensetzung (10, 50) in dem gesamten langgestreckten Verbundkörper, wobei die Polymerzusammensetzung ein thermoplastisches Ethylencopolymer umfasst, wobei das thermoplastische Ethylencopolymer ein Copolymer von Ethylen ist und wobei die Polymerzusammensetzung eine Spitzen-Schmelztemperatur in dem Bereich von 40 bis 140 °C, gemessen nach ASTM E794-06, aufweist, **dadurch gekennzeichnet, dass** die Polymerzusammensetzung ferner ein Schmiermittel umfasst.

2. Langgestreckter Verbundkörper nach Anspruch 1, wobei die Hochleistungs-Polyethylen-HPPE-Filamente als Garn (1) bereitgestellt sind, wobei das Garn mindestens zwei HPPE-Filamente mit einer Festigkeit von mindestens 0,6 N/tex umfasst.

3. Langgestreckter Verbundkörper nach Anspruch 1 oder 2, wobei das Polyethylen der Hochleistungs-Polyethylen(HPPE)-Filamente ein hohes Molekulargewicht aufweist und eine intrinsische Viskosität (IV) von mindestens 4 dl/g aufweist.

4. Langgestreckter Verbundkörper nach einem der Ansprüche 1 bis 3, wobei die HPPE-Filamente hochmolekulares Polyethylen (HMWPE) oder ultrahochmolekulares Polyethylen (UHMWPE) oder eine Kombination davon umfassen.

5. Langgestreckter Verbundkörper nach Anspruch 4, wobei die HPPE-Filamente aus HMWPE und/oder UHMWPE bestehen.

6. Langgestreckter Verbundkörper nach einem der Ansprüche 1 bis 5, wobei es sich bei dem Schmiermittel um ein Wachs handelt.

7. Langgestreckter Verbundkörper nach Anspruch 6, wobei es sich bei dem Wachs um synthetisches Wachs oder ein Pflanzenwachs handelt.

8. Langgestreckter Verbundkörper nach Anspruch 6, wobei es sich bei dem Wachs um ein Polyethylenwachs, ein Polypropylenwachs, Bienenwachs, Carnaubawachs oder ein Fischer-Tropsch-Wachs handelt.

9. Langgestreckter Verbundkörper nach einem der Ansprüche 1 bis 5, wobei es sich bei dem Schmiermittel um eine Polymerdispersion handelt.

10. Langgestreckter Verbundkörper nach Anspruch 9, wobei es sich bei der Polymerdispersion um eine Dispersion eines Polyurethans oder eines Acrylharzes oder eines Hybrid eines Polyurethans und eines Acrylharzes handelt.

11. Langgestreckter Verbundkörper nach einem der Ansprüche 1 bis 5, wobei das Schmiermittel Folgendes umfasst: ein synthetisches Fett oder Öl; ein mineralisches Fett oder Öl; einen anorganischen Feststoff wie Graphit oder Molybdändisulfid; eine Keramik wie ein keramisches Schmiermittel oder eine keramische Beschichtung oder eine beliebige Kombination davon.

12. Länglicher Körper, umfassend mindestens zwei langgestreckte Verbundkörper gemäß einem der vorhergehenden Ansprüche.

13. Länglicher Körper nach Anspruch 12, wobei der längliche Körper von 2 bis 100.000 langgestreckte Verbundkörper gemäß einem der Ansprüche 1 bis 11 umfasst.

14. Länglicher Körper nach Anspruch 12 oder 13, wobei der längliche Körper ein Strang (91, 101), ein Kabel, eine Schnur (81), ein Seil (90, 100, 131), ein Band, ein Streifen (62), ein Schlauch oder ein Rohr ist.

15. Länglicher Körper nach Anspruch 14, wobei der längliche Körper ein Seil ist, das von 3 bis 100.000 langgestreckte Verbundkörper gemäß einem der Ansprüche 1 bis 11 umfasst.

16. Gegenstand, umfassend mindestens einen langgestreckten Verbundkörper (3, 53) gemäß einem der Ansprüche 1 bis 11 und/oder umfassend mindestens einen länglichen Körper gemäß einem der Ansprüche 12 bis 15, wobei der Gegenstand eine synthetische Kette (60, 70), eine Schlinge, eine Sehne, ein Netz (80), ein Personenschutzgegenstand oder ein Handschuh ist.

17. Gegenstand nach Anspruch 16, wobei der Gegenstand eine Schlinge oder eine Sehne ist, die von 2 bis 100.000 langgestreckte Verbundkörper gemäß einem der Ansprüche 1 bis 11 umfasst.

18. Seil (90, 100, 131), Band oder Netz (80), umfassend mindestens drei langgestreckte Körper (3, 53) nach einem der Ansprüche 1 bis 11.

19. Kran, umfassend eine Seilscheibe (132, 133) und das Seil (90, 100, 131) nach Anspruch 15 oder 18.

20. Verfahren zur Herstellung eines langgestreckten Verbundkörpers (3, 53), umfassend die Schritte:

a) Bereitstellen einer Beschichtungszusammensetzung, wobei die Zusammensetzung Folgendes umfasst:

- ein thermoplastisches Ethylencopolymer und
- ein Schmiermittel;

b) Bereitstellen eines Garns (1), das mindestens zwei HPPE-Filamente umfasst, wobei die Filamente eine Festigkeit von mindestens 0,6 N/tex aufweisen;
c) Aufbringen der Beschichtungszusammensetzung auf das Garn, um ein beschichtetes Garn zu erhalten; und
d) Erhöhen der Temperatur des beschichteten Garns, um den langgestreckten Verbundkörper zu erhalten,

wobei das hochmolekulare thermoplastische Ethylencopolymer ein Copolymer von Ethylen ist und wobei das thermoplastische Ethylencopolymer eine Spitzen-Schmelztemperatur in dem Bereich von 40 bis 140 °C aufweist.

21. Verfahren nach Anspruch 20, wobei bei Schritt d) Erhöhen der Temperatur bewirkt, dass die Beschichtungszusammensetzung trocknet und das thermoplastische Ethylencopolymer schmilzt.

22. Verfahren zur Herstellung eines länglichen Körpers, umfassend den Schritt des Zusammensetzens von mindestens zwei langgestreckten Verbundkörpern gemäß einem der Ansprüche 1 bis 11, um den länglichen Körper zu bilden, wobei der längliche Körper vorzugsweise ein Seil (90, 100, 131), wie ein gelegtes Seil (90) oder geflochtenes Seil (100), ist.

23. Verfahren zur Herstellung eines Gegenstands, umfassend den Schritt des Bereitstellens des länglichen Körpers nach einem der Ansprüche 12 bis 15 und/oder des langgestreckten Verbundkörpers nach einem der Ansprüche 1 bis 11 und des Herstellens des Gegenstands, wobei der Gegenstand vorzugsweise ein Netz (80), eine synthetische Kette (60, 70), ein Personenschutzgegenstand oder ein Handschuh ist.

24. Verfahren zum Anheben und / oder Platzieren eines Gegenstands, umfassend die Schritte

a) Bereitstellen eines Seils (90, 100) gemäß Anspruch 15 oder 18;
b) Verbinden des Seils mit dem anzuhebenden Gegenstand; und
c) Verwenden des Seils, um den Gegenstand anzuheben und/oder zu platzieren.

25. Verwendung einer Polymerzusammensetzung (10, 50), die ein thermoplastisches Ethylencopolymer und ein Schmiermittel umfasst, zur Verringerung des Abriebs eines Seils (90, 100, 131), einer synthetischen Kette (60, 70) oder eines Bands, das bzw. die eine solche Zusammensetzung umfasst, wobei das Seil, die synthetische Kette oder das Band Hochleistungs-Polyethylen-HPPE-Filamente mit einer Festigkeit von mindestens 0,6 N/tex umfasst und wobei das thermoplastische Ethylencopolymer ein Copolymer von Ethylen ist und wobei die Polymerzusammensetzung eine Spitzen-Schmelztemperatur in dem Bereich von 40 bis 140 °C, gemessen nach ASTM E794-06, aufweist.

26. Verwendung nach Anspruch 25, wobei es sich bei dem Schmiermittel um ein Wachs handelt und es sich vorzugsweise bei dem Wachs um ein Polyethylenwachs, ein Polypropylenwachs, Bienenwachs, Carnaubawachs oder ein Fischer-Tropsch-Wachs handelt.

**Revendications**

1. Corps allongé composite (3, 53), comprenant des filaments de polyéthylène haute performance HPPE (2, 52, 125) ayant une ténacité d'au moins 0,6 N/tex et une composition polymérique (10, 50) dans tout le corps allongé composite, dans lequel la composition polymérique comprend un copolymère d'éthylène thermoplastique,
dans lequel le copolymère d'éthylène thermoplastique est un copolymère d'éthylène et dans lequel ladite composition polymérique a une température maximale de fusion comprise entre 40 et 140 °C, mesurée selon la norme ASTM E794-06, **caractérisé en ce que** la composition polymérique comprend en outre un lubrifiant.

2. Corps allongé composite selon la revendication 1, dans lequel les filaments de polyéthylène haute performance HPPE sont fournis sous la forme d'un fil (1), ledit fil comprenant au moins deux filaments de HPPE ayant une ténacité d'au moins 0,6 N/tex.

3. Corps allongé composite selon la revendication 1 ou 2, dans lequel le polyéthylène des filaments de polyéthylène haute performance (HPPE) a un poids moléculaire élevé et a une viscosité intrinsèque (IV) d'au moins 4 dl/g.

4. Corps allongé composite selon l'une quelconque des revendications 1 à 3, dans lequel les filaments de HPPE comprennent un polyéthylène de poids moléculaire élevé (HMWPE) ou un polyéthylène de poids moléculaire ultra élevé (UHMWPE) ou une combinaison de ceux-ci.

5. Corps allongé composite selon la revendication 4, dans lequel les filaments de HPPE sont constitués de HMWPE et/ou UHMWPE.

6. Corps allongé composite selon l'une quelconque des revendications 1 à 5, dans lequel le lubrifiant est une cire.

7. Corps allongé composite selon la revendication 6, dans lequel la cire est une cire synthétique ou une cire végétale.

8. Corps allongé composite selon la revendication 6, dans lequel la cire est une cire de polyéthylène, une cire de polypropylène, une cire d'abeille, une cire de carnauba ou une cire de Fischer-Tropsch.

9. Corps allongé composite selon l'une quelconque des revendications 1 à 5, dans lequel le lubrifiant est une dispersion polymérique.

10. Corps allongé composite selon la revendication 9, dans lequel la dispersion polymérique est une dispersion d'un polyuréthane ou d'un acrylique, ou un hybride d'un polyuréthane et d'un acrylique.

11. Corps allongé composite selon l'une quelconque des revendications 1 à 5, dans lequel le lubrifiant comprend : une graisse ou huile synthétique ; une graisse ou huile minérale ; un solide inorganique tel que du graphite ou du disulfure de molybdène ; une céramique telle qu'un lubrifiant de céramique ou un revêtement de céramique ; ou toute combinaison de ceux-ci.

12. Corps long comprenant au moins deux corps allongés composites tels que définis dans l'une quelconque des revendications précédentes.

13. Corps long selon la revendication 12, dans lequel le corps long comprend 2 à 100 000 corps allongés composites tels que définis dans l'une quelconque des revendications 1 à 11.

14. Corps long selon la revendication 12 ou 13, dans lequel le corps long est un toron (91, 101), un câble, un cordon (81), une corde (90, 100, 131), une courroie, une bande (62), un tuyau ou un tube.

15. Corps long selon la revendication 14, dans lequel le corps long est une corde comprenant de 3 à 100 000 corps allongés composites tels que définis dans l'une quelconque des revendications 1 à 11.

16. Article comprenant au moins un corps allongé composite (3, 53) tel que défini dans l'une quelconque des revendications 1 à 11 et/ou comprenant au moins un corps long tel que défini dans l'une quelconque des revendications 12 à 15, dans lequel l'article est une chaîne synthétique (60, 70), une élingue, un tendon, un filet (80), un objet de protection personnelle ou un gant.

**17.** Article selon la revendication 16, dans lequel l'article est une élingue ou un tendon comprenant de 2 à 100 000 corps allongés composites tels que définis dans l'une quelconque des revendications 1 à 11.

**18.** Corde (90, 100, 131), courroie ou filet (80) comprenant au moins trois corps allongés (3, 53) selon l'une quelconque des revendications 1 à 11.

**19.** Grue comprenant un réa (132, 133) et la corde (90, 100, 131) selon la revendication 15 ou 18.

**20.** Procédé de fabrication d'un corps allongé composite (3, 53) comprenant les étapes de :

a) fourniture d'une composition de revêtement, dans lequel la composition comprend

■ un copolymère d'éthylène thermoplastique et
■ un lubrifiant ;

b) fourniture d'un fil (1) comprenant au moins deux filaments de HPPE, les filaments ayant une ténacité d'au moins 0,6 N/tex ;
c) application de la composition de revêtement sur le fil pour obtenir un fil revêtu ; et
d) augmentation de la température du fil revêtu pour obtenir le corps allongé composite,

dans lequel le copolymère d'éthylène thermoplastique à poids moléculaire élevé est un copolymère d'éthylène et dans lequel ledit copolymère d'éthylène thermoplastique possède une température maximale de fusion dans la plage de 40 à 140 °C.

**21.** Procédé selon la revendication 20, dans lequel, à l'étape d), l'augmentation de la température provoque le séchage de la composition de revêtement et la fusion du copolymère d'éthylène thermoplastique.

**22.** Procédé de fabrication d'un corps allongé comprenant l'étape d'assemblage d'au moins deux corps allongés composites tels que définis dans l'une quelconque des revendications 1 à 11 pour former le corps allongé, de préférence le corps allongé est une corde (90, 100, 131), telle qu'une corde posée (90) ou tressée (100).

**23.** Procédé de fabrication d'un article comprenant l'étape de fourniture du corps long selon l'une quelconque des revendications 12 à 15 et/ou du corps allongé composite selon l'une quelconque des revendications 1 à 11 et de production de l'article, dans lequel de préférence l'article est un filet (80), une chaîne synthétique (60, 70), un objet de protection personnelle ou un gant.

**24.** Procédé de levage et/ou de placement d'un objet comprenant les étapes de

a) fourniture d'une corde (90, 100) telle que définie dans la revendication 15 ou 18 ;
b) connexion de la corde à l'objet à lever ; et
c) utilisation de la corde pour lever et/ou placer l'objet.

**25.** Utilisation d'une composition polymérique (10, 50) comprenant un copolymère d'éthylène thermoplastique et un lubrifiant pour réduire l'abrasion d'une corde (90, 100, 131), d'une chaîne synthétique (60, 70) ou d'une courroie comprenant une telle composition, dans laquelle la corde, la chaîne synthétique ou la courroie comprend des filaments de polyéthylène haute performance HPPE ayant une ténacité d'au moins 0,6 N/tex, et dans laquelle le copolymère d'éthylène thermoplastique est un copolymère d'éthylène et dans laquelle ladite composition polymérique a une température maximale de fusion dans la plage de 40 à 140 °C, mesurée selon la norme ASTM E794-06.

**26.** Utilisation selon la revendication 25, dans laquelle le lubrifiant est une cire, de préférence la cire est une cire de polyéthylène, une cire de polypropylène, une cire d'abeille, une cire de carnauba ou une cire de Fischer-Tropsch.

# Figure 1

Fig 1a

Fig 1b

Fig 1c

# Figure 2

21

24

25

21

20

20

G

F

23

22

Fig 2b

23

22

Fig 2a

B

A C

S

L

E

Fig 2c

Figure 3

Figure 4

Figure 5

54    55    56

52

50

53

62

60

61

Figure 6

70

71

Figure 7

Figure 8a

Figure 8b

Figure 9

Figure 10

Figure 11

Figure 12

Figure 13

Figure 13a

Figure 13b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007062803 A
- WO 2011015485 A
- WO 2017060461 A
- US 2007202329 A
- GB 1405551 A
- GB 2042414 A
- GB 2051667 A
- EP 0205960 A
- WO 0173173 A1
- WO 2013186206 A
- WO 2016001158 A

**Non-patent literature cited in the description**

- **VANDENBURG et al.** The Structural Constituents of Carnauba Wax. *J. Am. Oil Chem. Soc.*, 1970, vol. 47, 514-518
- **BASSON et al.** An Investigation of the Structures and Molecular Dynamics of Natural Waxes: II Carnauba Wax. *J. Phys. D: Appl. Phys.*, 1988, vol. 21, 1429
- **VANDENBURG et al.** The Structural Constituents of Carnauba Wax. *J. Am. Oil Chem. Soc*, 1970, vol. 47, 514-518